(19) Europäisches Patentamt
European Patent Office
Office européen des brevets

(11) EP 4 201 973 A1

(12) **EUROPÄISCHE PATENTANMELDUNG**

(43) Veröffentlichungstag:
**28.06.2023 Patentblatt 2023/26**

(21) Anmeldenummer: **21216602.9**

(22) Anmeldetag: **21.12.2021**

(51) Internationale Patentklassifikation (IPC):
***C08G 2/08*** *(2006.01)* ***C08G 2/30*** *(2006.01)*
***C08G 2/34*** *(2006.01)* ***C08G 18/56*** *(2006.01)*

(52) Gemeinsame Patentklassifikation (CPC):
**C08G 2/30; C08G 2/08; C08G 2/34; C08G 18/56; C08G 18/72**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **MACHAT, Martin**
  **50735 Köln (DE)**
- **VASIUTA, Roman**
  **52074 Aachen (DE)**
- **LEITNER, Walter**
  **52074 Aachen (DE)**
- **ANTONELS, Nathan**
  **52066 Aachen (DE)**
- **LANGANKE, Jens**
  **53894 Mechernich (DE)**
- **GUERTLER, Christoph**
  **50735 Köln (DE)**

(74) Vertreter: **Levpat**
**c/o Covestro AG**
**Gebäude K12**
**51365 Leverkusen (DE)**

(54) **PRÄPOLYMER UMFASSEND EINEN POLYOXYMETHYLEN-BLOCK UND DESSEN HERSTELLUNGSVERFAHREN**

(57) Die vorliegende Erfindung beschreibt ein Präpolymer (A) umfassend einen Polyoxymethylen-Block sowie ein Verfahren zur Herstellung des Präpolymers (A). Auch das Präpolymer (E) und dessen Herstellungsverfahren durch weitere Umsetzung des Präpolymers (A) sind Erfindungsgegenstand.



Processed by Luminess, 75001 PARIS (FR)

## Beschreibung

Die vorliegende Erfindung beschreibt ein Präpolymer (A) umfassend einen Polyoxymethylen-Block sowie ein Verfahren zur Herstellung des Präpolymers (A). Auch das Präpolymer (E) und dessen Herstellungsverfahren durch weitere Umsetzung des Präpolymers (A) sind Erfindungsgegenstand.

In DE 1144725 B wird ein Verfahren zur Herstellung von Dietherverbindungen von speziellen Oligo-(oxymethylen)-glykolen offenbart, wobei die Dietherverbindung durch Umsetzung einer Formaldehydquelle wie Paraformaldehyd mit einem Überschuss von funktionalisierten Alkoholen wie Allylalkohol in Gegenwart von Iod, mehrbasiger Säuren oder Metallhalogenide als Katalysatoren bei Reaktionstemperaturen von bis zu 200 °C erhalten werden.

In GB 996,826 A werden Epoxyether von Oligo-(oxymethylen)-glykolen offenbart, wobei diese Epoxyether durch Epoxidierung von ungesättigten Diethern von Oligo-(oxymethylen)-glykolen in Gegenwart von aromatischen oder aliphatischen Persäuren.US 3575930 A beschreibt ein Verfahren zur Herstellung von NCO-Präpolymeren durch Umsetzung von niedermolekularem polymeren Formaldehyd (pFA) mit Diisocyanaten im Überschuss. Die niedermolekularen pFA Fraktionen werden durch Extraktion mit siedendem Dioxan (Sdp. 101 °C) und anschließender Filtration erhalten und sind nicht lagerbar. Darüber hinaus ist ein energieintensiver azeotroper Destillationsschritt mit Benzol notwendig, um die niedermolekularen pFA Fraktionen in Lösung von Wasser zu befreien bevor das niedermolekulare polymere Formaldehyd mit Diisocyanaten umgesetzt werden kann. Zudem finden die beschriebene Azeotropdestillation sowie die Umsetzung von pFA mit Diisocyanaten bei relativ hohen Temperaturen statt, so dass Zersetzungsreaktionen unter Bildung von erheblichen Mengen monomerem Formaldehyd stattfinden.

WO 2004/096746 A1 offenbart die Reaktion von Formaldehyd-Oligomeren mit Alkylenoxiden oder Isocyanaten. Dabei wird eine Formalinlösung zunächst bei 80 °C und 120 mbar eingedampft und anschließend mit Propylenoxid in Gegenwart eines basischen Katalysators umgesetzt, wobei niedermolekulare Addukte aus 2 Molekülen Propylenoxid und 2 Molekülen Formaldehyd gebildet werden.

In WO 2014/095679 A1 wird ein Verfahren zur Herstellung von NCO-modifizierten Polyoxymethylen-Block-Copolymeren offenbart, umfassend den Schritt der Polymerisation von Formaldehyd in einem Reaktionsgefäß in Gegenwart eines Katalysators, wobei die Polymerisation von Formaldehyd weiterhin in Gegenwart einer Starterverbindung mit mindestens 2 Zerewitinoffaktiven H-Atomen unter Erhalt eines Zwischenprodukts erfolgt und dieses mit einem Isocyanat umgesetzt wird.

In EP 3498743 A1 wird ein Verfahren zur Herstellung eines Polyoxymethylen-Gruppen enthaltenden Präpolymers, umfassend den Schritt der Reaktion einer Polyolkomponente mit einer gegenüber OH-Gruppen reaktiven Verbindung, wobei die Polyolkomponente ein OH-Endgruppen enthaltendes Polyoxymethylen umfasst, dessen OH-Endgruppen nicht Teil von Carboxylgruppen sind. Die Reaktion wird in Gegenwart einer ionischen Fluorverbindung durchgeführt, wobei die ionische Fluorverbindung eine koordinativ gesättigte Verbindung ist. Nachteilig an dieser Verfahrensweise ist, dass Fluorverbindungen vor der Umsetzung der Präpolymere zu PolyurethanSchäumen abgetrennt werden müssen, da sie sich negativ auf die Schaumbildungsreaktionen auswirken können.

In WO 2020/099601 A1 wird ein Verfahren zur Herstellung eines ein NCO-terminiertes Präpolymers mithilfe der Reaktiv-Soxhlet-Extraktion offenbart, bei dem eine Lösung bestehend aus polymerem Formaldehyd in einem aprotischen Lösungsmittel mit einer Siedetemperatur von kleiner oder gleich 60 °C bei 1 bara aus einem ersten Behälter in einen zweiten Behälter enthaltend ein Polyisocyanat überführt und zum NCO-terminiertes Präpolymer umgesetzt wird. Das Lösungsmittel wird dabei kontinuierlich aus dem zweiten Behälter in den ersten Behälter zurückgeführt.

Nach dem bisherigen Stand der Technik wird die Umsetzung von polymerem Formaldehyd entweder bei verhältnismäßig hohen Temperaturen durchgeführt, wobei eine Depolymerisation der polymeren Formaldehyd-Verbindungen eintritt oder es müssen teilweise zusätzliche Fluor-haltige Verbindungen als Lösungsvermittler zugesetzt werden, um das Lösungsverhalten des schwerlöslichen polymeren Formaldehyds zu verbessern, welches die nachfolgenden Reaktionen wie beispielsweise der Polyurethanisierungsreaktion stören kann und einem zusätzlichen Verfahrensschritt abgetrennt werden muss.

Ausgehend vom Stand der Technik ergab sich die Aufgabe, ein einfach aufskalierbares und thermisch schonendes Verfahren bereitzustellen, um technisch prozessierbare, gut verarbeitbare, reaktive Präpolymere mit einer einstellbaren Anzahl an Oxymethylen-Wiederholungseinheiten bevorzugt 5 bis 12 Oxymethylen-Wiederholungseinheiten bereitzustellen. Ein weiterer wesentlicher Aspekt der Erfindung ist die Verbesserung der thermischen Stabilität des reaktiven Präpolymers enthaltend einen Polyoxymethylen-Block ggü. der aus dem Stand der Technik bekannten meist Isocyanat- oder -olefinisch terminierten Präpolymeren, da die weitere Umsetzung der Präpolymere zu polymeren Strukturen meist bei einer erhöhten Temperatur stattfindet. Da polymeres Formaldehyd jedoch bekanntlich bei diesen Temperaturen meist in kleinere, meist undefiniertere Oligo- bzw. Monomere depolymerisiert, ist eine chemische Stabilisierung notwendig. Daher war es Aufgabe der vorliegenden Erfindung, gut verarbeitbare, reaktive Präpolymere mit einer Onset-Temperatur T(onset) von mindestens 105 °C bereitzustellen, wobei T(onset) der minimalen Temperatur entspricht, bei dem 5 Gew.-% des Materials infolge des Zersetzungsprozesses des Präpolymers gemäß der im Experimentalteil beschrieben Methode verloren geht. Erfindungsgemäß gelöst wird die Aufgabe durch ein Präpolymer (A) gemäß Anspruch

1 oder 7, ein Verfahren zur Herstellung eines Präpolymers (A) gemäß Anspruch 2, ein Präpolymer (E) gemäß Anspruch 8 oder 14 sowie ein Verfahren zur Herstellung eines Präpolymers (E) gemäß Anspruch 10 sowie ein Verfahren zur Herstellung eines Präpolymers (I) gemäß Anspruch 15.

Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß gelöst wird diese Aufgabe durch ein Präpolymer (A) umfassend einen Polyoxymethylen-Block umfassend folgende Struktur

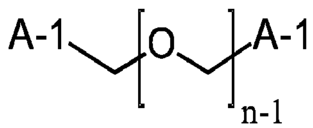

mit A-1 = Cl, Br, I, $O\text{-}SO_2\text{-}C_6H_4\text{-}CH_3$ (OTs), $O\text{-}SO_2\text{-}CH_3$ (OMs) und/oder $O\text{-}SO_2\text{-}CF_3$ (OTf) bevorzugt Cl;

und mit einer mit einer zahlenmittleren Anzahl an Polyoxymethylenwiederholungseinheiten n von 3 bis 25 bevorzugt 4 bis 18 und besonders bevorzugt von 5 bis 12 beträgt, wobei die Anzahl an Polyoxymethylenwiederholungseinheiten mittels der im Experimentalteil offenbarten Protonenresonanzspektroskopie bestimmt worden ist.

Weiterhin wurde diese Aufgabe erfindungsgemäß gelöst durch ein Verfahren zur Herstellung eines Präpolymers (A) umfassend einen Polyoxymethylen-Block durch Umsetzung von polymerem Formaldehyd mit einer Verbindung (B) optional in Gegenwart einer Verbindung (C) und optional in einem Lösungsmittel (D),

wobei das polymerem Formaldehyd ein oder mehrere, bevorzugt 2 oder 3 und besonders bevorzugt 2 terminale Hydroxylgruppen aufweist,

wobei das Präpolymers (A) ein oder mehrere bevorzugt zwei reaktive Gruppe (A-1) aufweist, wobei die reaktiven Gruppen (A-1) Cl, Br, I, O-SO2-C6H4-CH3 (OTs), O-SO2-CH3 (OMs) und/oder O-SO2-CF3 (OTf) bevorzugt Cl sind;

wobei die Verbindung (B) ein oder mehrere bevorzugt ein oder zwei reaktive Gruppe (B-1) sowie aufweist, wobei die reaktiven Gruppen (B-1) Cl, Br, I, O-SO2-C6H4-CH3 (OTs), O-SO2-CH3 (OMs) und/oder O-SO2-CF3 (OTf) bevorzugt Cl ist

und wobei die die Verbindung (B) ein oder mehrere bevorzugt ein oder zwei Hydroxylgruppen-reaktive Gruppe (B-2) sowie aufweist.

Die Verwendung des Worts ein im Zusammenhang mit zählbaren Größen ist hierbei und im Folgenden nur dann als Zahlwort zu verstehen, wenn dies aus dem Zusammenhang hervorgeht (bspw. durch die Formulierung "genau ein"). Ansonsten umfassen Ausdrücke wie "eine polymere Formaldehydverbindung" etc. immer auch solche Ausführungsformen, in denen zwei oder mehr polymere Formaldehydverbindungen etc. eingesetzt werden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Präpolymere (A) umfassend einen Polyoxymethylen-Block im Sinne der Erfindung bezeichnen polymere Verbindungen, die mindestens einen Polyoxymethylen-Block sowie mindestens eine zusätzliche funktionelle Einheit ungleich einer Oxymethyleneinheit enthalten, wobei die zusätzliche molekulare Einheit reaktiv für nachfolgende Reaktionen ist. Beispielweise sind Cl-terminierte Präpolymere (A), wobei Cl eine reaktive Gruppe (A-1) ist, als Reaktionsprodukt von der Umsetzung von polymeren Formaldehyd mit einem Überschuss an Thionylchlorid (SOCl2) mit Cl als reaktive Gruppe (B-1) sowie Hydroxylgruppen-reaktive Gruppe (B-2) erhältlich.

Erfindungsgemäß weist das polymere Formaldehyd ein oder mehrere, terminale Hydroxylgruppen bevorzugt 2 oder 3 und besonders bevorzugt 2 terminale Hydroxylgruppen auf.

Als polymeres Formaldehyd für das erfindungsgemäße Verfahren eignen sich grundsätzlich solche oligomeren und polymeren Formen des Formaldehyds, welche wenigstens eine bevorzugt mindestens zwei terminale Hydroxylgruppen zur Reaktion mit den OH-reaktiven Gruppen einer OH-reaktiven Verbindung aufweisen. Unter dem Begriff "terminale Hydroxylgruppe" wird erfindungsgemäß insbesondere eine terminale Halbacetal-Funktionalität verstanden, welche sich als Strukturmerkmal über die Polymerisation des Formaldehyds ergibt. Beispielsweise können die Starterverbindungen Oligomere und Polymere des Formaldehyds der allgemeinen Formel $HO\text{-}(CH_2O)_n\text{-}H$ sein, wobei n für eine natürliche Zahl $\geq 2$ steht und wobei polymeres Formaldehyd typischerweise $n > 8$ Wiederholungseinheiten aufweist.

Für das erfindungsgemäße Verfahren geeignetes polymeres Formaldehyd weist im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol auf und umfasst von 2 bis 1000, bevorzugt von 2 bis 400, besonders bevorzugt von 8 bis 200 und ganz besonders bevorzugt von 8 bis 100 Oxymethylen-Wiederholungseinheiten. Die im erfindungsgemäßen Verfahren eingesetzte polymere Formaldehyd hat typischerweise eine Funktionalität (F), d.h. m terminale Hydroxylgruppe aufweist, von 2 bis 3, in bestimmten Fällen können diese aber auch höherfunktionell sein, also eine Funktionalität > 3 besitzen. Bevorzugt wird im erfindungsgemäßen Verfahren offenkettiges polymeres Formaldehyd mit terminalen Hydroxylgruppen eingesetzt, welches eine Funktionalität von 2 bis 10, bevorzugt von 2 bis 5, besonders bevorzugt von 2 bis 3 hat. Ganz besonders bevorzugt wird im erfindungsgemäßen Verfahren lineares polymeres Formaldehyd eingesetzt, welches eine Funktionalität von 2 mit 2 terminalen Hydroxylgruppen aufweist. Die Funktionalität F entspricht der Anzahl an terminalen OH-Endgruppen (terminalen Hydroxylgruppen m) pro Molekül.

In einer bevorzugten Ausführungsform des erfindungsgemäßen Verfahrens erfolgt die Herstellung des polymeren Formaldehyds, gemäß der Lehre der Ansprüche 1 bis 9 speziell Beispiel 8 der PCT/EP2021/085078, wobei ein Polyol umfassend einen Polyoxymethylen-Block mit einer zahlenmittleren Anzahl an Polyoxymethylenwiederholungseinheiten des Polyols umfassend einen Polyoxymethylen-Block von 3 bis 25 bevorzugt 4 bis 18 und besonders bevorzugt von 5 bis 12 erhalten wird.

Die Herstellung von polymeren Formaldehyd, welches für das erfindungsgemäße Verfahren eingesetzt wird, kann nach bekannten Verfahren erfolgen (vgl. z.B. M. Haubs et. al., 2012, Polyoxymethylenes, Ullmann's Encyclopedia of Industrial Chemistry; G. Reus *et. al.*, 2012, Formaldehyde, *ibid*). Das polymere Formaldehyd kann im erfindungsgemäßen Verfahren grundsätzlich auch in Form eines Copolymers eingesetzt werden, wobei als Comonomere neben Formaldehyd beispielsweise 1,4-Dioxan, oder 1,3-Dioxolan einpolymerisiert sind. Weitere geeignete Formaldehyd-Copolymere für das erfindungsgemäße Verfahren sind Copolymere des Formaldehyds sowie des Trioxans mit cyclischen und/oder linearen Formalen, wie beispielsweise Butandiolformal, Epoxiden oder cyclischen Carbonaten (vgl. z.B. EP 3 080 177 B1). Es ist ebenfalls denkbar, dass als Comonomere höhere homologe Aldehyde, wie beispielweise Acetaldehyd, Propionaldehyd, etc., in das Formaldehyd-Polymer eingebaut sind. Ebenfalls ist es denkbar, dass erfindungsgemäße polymere Formaldehyd wiederum ausgehend von H-funktionellen Starterverbindungen hergestellt wird, insbesondere lassen sich hierbei durch den Einsatz von mehrwertigen Starterverbindungen polymeres Formaldehyd mit einer Hydroxy-Endgruppen-Funktionalität F > 2 erhalten (vgl. z.B. WO 1981001712 A1, Bull. Chem. Soc. J., 1994, 67, 2560-2566, US 3436375, JP 03263454, JP 2928823).

Bekanntlich polymerisiert Formaldehyd bereits durch die Gegenwart geringer Wasserspuren. In wässriger Lösung bildet sich daher in Abhängigkeit von Konzentration und Temperatur der Lösung ein Gemisch von Oligomeren und Polymeren unterschiedlicher Kettenlängen, welche mit molekularem Formaldehyd und Formaldehyd-Hydrat im Gleichgewicht stehen. Sogenanntes Paraformaldehyd als spezifische Ausführungsform von polymerem Formaldehyd fällt hierbei als ein weißer, schlecht-löslicher Feststoff, aus der Lösung aus und stellt in der Regel ein Gemisch linearer Formaldehyd-Polymere mit 8 bis 100 Oxymethylen-Wiederholungseinheiten dar.

Ein Vorteil des erfindungsgemäßen Verfahrens liegt insbesondere darin, dass entweder wässrige Formalinlösung oder polymeres Formaldehyd speziell Paraformaldehyd, welche beide kommerziell großtonnagig und kostengünstig erhältlich sind und eine vorteilhafte $CO_2$-Bilanz aufweisen, direkt eingesetzt werden können.

Eine Polyoxymethylen-Gruppe (Polyoxymethylen-Block (POM)) bezeichnet grundsätzlich eine polymere Struktureinheit $-(CH_2-O-)_x$ wobei x für eine ganze Zahl $\geq 2$ steht, die mindestens eine an zwei Sauerstoffatome gebundene $CH_2$-Gruppe enthält, welche über mindestens eines der Sauerstoffatome mit weiteren Methylengruppen oder anderen polymeren Strukturen verbunden ist. Erfindungsgemäß enthalten Polyoxymethylen-Blöcke $-(CH_2-O-)_x$ durchschnittlich $x \geq 3$ bis $x \leq 25$, mehr bevorzugt durchschnittlich $x \geq 4$ bis $x \leq 18$ und besonders bevorzugt durchschnittlich $x \geq 5$ bis $x \leq 12$ Oxymethylen-Einheiten.

Im Sinne der Erfindung werden unter einem Polyoxymethylen-Block auch solche Blöcke verstanden, welche geringe Anteile weiterer Wiederholungseinheiten aus monomeren und/oder oligomeren Einheiten ungleich der Oxymethylen-Wiederholungseinheiten , wobei der Anteil dieser Einheiten im Allgemeinen weniger als 25 mol% bevorzugt weniger als 10 mol%, bevorzugt weniger als 5 mol% bezogen auf die Gesamtmenge der im Block enthaltenen Monomereneinheiten beträgt. Diese Wiederholungseinheiten aus monomeren und/oder oligomeren Einheiten ungleich der Oxymethylen-Wiederholungseinheiten sind hierbei gemäß des allgemeinen Fachwissens (vgl. G. Reus et. al., 2012, Formaldehyde, Ullmann's Encyclopedia of Industrial Chemistry; 2012) beispielweise freies oder im Polyoxymethylen-Block gebundenes Wasser.

In einer bevorzugten Ausführungsform enthält der Polyoxymethylen-Block keine weiteren Anteile weiterer Wiederholungseinheiten aus monomeren und/oder oligomeren Einheiten ungleich der Oxymethylen-Wiederholungseinheiten

Erfindungsgemäß weist die Verbindung (B) eine oder mehrere bevorzugt zwei reaktive Gruppe (B-1) auf, wobei die Hydroxylgruppen-reaktive Gruppe (B-1) ausgewählt wird aus der Gruppe Cl, Br, I, $O-SO_2-C_6H_4-CH_3$ (OTs), $O-SO_2-CH_3$ (OMs) und/oder $O-SO_2-CF_3$ (OTf) bevorzugt Cl.

Erfindungsgemäß weist die Verbindung (B) weiterhin eine oder mehrere bevorzugt ein oder zwei Hydroxylgruppen-reaktive Gruppe (B-2) sowie auf.

In einer Ausführungsform des erfindungsgemäßen Verfahrens ist die Verbindung (B) eine oder mehrere Verbindungen und wird ausgewählt aus der Gruppe bestehend aus $PCl_5$, $PCl_3$, $POCl_3$, $PCl_5$, $PBr_3$, $POBr_3$, $PBr_3$, $PI_3$, $SOCl_2$, $SOBr_2$, p-Toluolsulfonsäurechlorid, p-Toluolsulfonsäurebromid Methansulfonylchlorid, Methansulfonylbromid und Trifluormethansulfonsäure-anhydrid bevorzugt $SOCl_2$.

In einer Ausführungsform des erfindungsgemäßen Verfahrens beträgt das Stoffmengenverhältnis der terminalen Hydroxylgruppen des polymeren Formaldehyds zur Verbindung (B) von 0,9:1,0 bis 1,0:10,9 bevorzugt von 0,95:1,0 bis 1,0:2,0 besonders bevorzugt von 1,0:1,0 bis 1,0:1,2.

In einer Ausführungsform des erfindungsgemäßen Verfahrens ist die Verbindung (C) eine Base.

In einer Ausführungsform des erfindungsgemäßen Verfahrens weist die Base einen $pK_S$-Wert von 4 bis 10 bevorzugt von 5 bis 8 auf.

In einer bevorzugten Ausführungsform des erfindungsgemäßen Verfahrens ist die Verbindung (C) eine Base, wobei die Base eine oder mehrere Verbindungen und wird ausgewählt aus der Gruppe bestehend aus Pyridin, 2-Picolin, 3-Picolin, 4-Picolin, 2,3-Lutidin, 2,4-Lutidin, 2,5-Lutidin, 2,6-Lutidin, 3,4-Lutidin, 3,5-Lutidin, 2,3,4-Collidin, 2,3,5-Collidin, 2,3,6-Collidin, 2,4,5-Collidin, 2,4,6-Collidin, 3,4,5-Collidin, N,N-dimethylaminopyridin, Imidazol, 1-Methylimidazol, 2-Methylimidazol, 4(5)-Methylimidazol, 1,2-Dimethylimidazol, 2,4(5)Dimethylimidazol, 1-Ethylimidazol, 2-Ethylimidazol, 1-Phenylimidazol, 2-Phenylimidazol, 4(5)Phenylimidazol, 1-Azanaphthalin (Chinolin), N,N-Dimethylanilin bevorzugt Pyridin und 2,6-Lutidin.

In einer Ausführungsform des erfindungsgemäßen Verfahrens beträgt das Stoffmengenverhältnis der Verbindung (B) und der Verbindung (C) von 0,9:1,0 bis 1,0:10,9 bevorzugt von 0,95:1,0 bis 1,0:2,0 besonders bevorzugt von 1,0:1,0 bis 1,0:1,2.

In einer Ausführungsform des erfindungsgemäßen Verfahrens ist das Lösungsmittel (D) eine oder mehrere Verbindungen und wird ausgewählt aus der Gruppe bestehend aus 1,4-Dioxan, Ethylenglycoldimethylether, Diethylenglycoldimethylether, Tetrahydrofuran, bevorzugt 1,4-Dioxan und Tetrahydrofuran.

In einer Ausführungsform des erfindungsgemäßen Verfahrens beträgt die berechnete Konzentration des polymeren Formaldehyds im Lösungsmittel (D) von 1 Gew.-% bis 90 Gew.-% bevorzugt von 2 Gew.-% bis 60 Gew.-%.

In einer Ausführungsform des erfindungsgemäßen Verfahrens erfolgt die Umsetzung zum Präpolymer (A) bei einer Temperatur von -80 °C bis 80 °C bevorzugt von -20 °C bis 30 °C.

In einer Ausführungsform des erfindungsgemäßen Verfahrens erfolgt die Umsetzung zum Präpolymer (A) bei einem Druck von 0,5 bara bis 20 bara bevorzugt von 0,9 bara bis 5 bara.

In einer Ausführungsform des erfindungsgemäßen Verfahrens erfolgt die Umsetzung zum Präpolymer (A) innerhalb einer Reaktionszeit von 1 min bis 24 h bevorzugt von 30 min bis 6 h. Ein weiterer Gegenstand der Erfindung ist das Präpolymer (A) erhältlich nach dem erfindungsgemäßen Verfahren.

In einer Ausführungsform der Erfindung beträgt die zahlenmittlere Anzahl an Polyoxymethylenwiederholungseinheiten des Präpolymers (A) von 3 bis 25 bevorzugt 4 bis 18 und besonders bevorzugt von 5 bis 12, wobei die Anzahl an Polyoxymethylenwiederholungseinheiten mittels der im Experimentalteil offenbarten Protonenresonanzspektroskopie bestimmt worden ist.

Ein weiterer Gegenstand der Erfindung ist ein Präpolymer (E) umfassend folgende Struktur

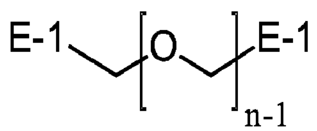

mit E-1 = Azid ($N_3$),$O-CO-CH=CH_2$, $O-CO-C(CH_3)=CH_2$, $O-CO-CH=CH(CH_3)$, $O-CO-CH_2-CH=CH_2$, $O-CO-CH_2-C(CH_3)=CH_2$, $O-CO-CH_2-CH=CH(CH_3)$, $O-CO-O-CH_2-CH=CH_2$, $O-CO-O-CH_2-C(CH_3)=CH_2$, $O-CO-O-CH_2-CH=CH(CH_3)$, $O-CO-C\equiv CH$, $O-CO-CH_2-C\equiv CH$, $O-CO-C\equiv N$, $O-CO-CH_2-C\equiv N$, $O-CO-(CH_2)_5-OH$, O-CO-Oxiran, $O-CO-CH_2$-Oxiran, $O-CH_2-CH=CH_2$, $O-CH(CH_3)-CH=CH_2$, $O-CH_2-C(CH_3)=CH_2$, $O-CH_2-CH=CH(CH_3)$, $O-(CH_2)_2-CH=CH_2$, $O-(CH_2)_4-CH=CH_2$, $O-(CH_2)_6-CH=CH_2$, $O-CH_2-C\equiv CH$, $O-CH_2-C\equiv C(CH_3)$, $O-(CH_2)_2-C\equiv C(CH_3)$, $O-(CH_2)_4-C\equiv C(CH_3)$, $O-(CH_2)_6-C\equiv C(CH_3)$, $O-CH_2-C\equiv N$, $O-(CH_2)_2-C\equiv N$, $O-(CH_2)_3-C\equiv N$, $O-(CH_2)_4-C\equiv N$, $O-(CH_2)_5-C\equiv N$, $O-(CH_2)_6-C\equiv N$, $O-(CH_2)_2-OH$, $O-(CH_2)_3-OH$, $O-(CH_2)_4-OH$, $O-(CH_2)_5-OH$, $O-(CH_2)_6-OH$, $O-(CH_2)_7-OH$, $O-(CH_2)_8-OH$, $O-CH_2-CH(CH_3)-OH$, $O-CH(CH_3)-CH_2-OH$, $(O-CH_2-CH_2)_2-OH$, $(O-CH_2-CH_2)_3-OH$, $[O-CH_2-CH(CH_3)]_2-OH$ und deren Regioisomere, $[O-CH_2-CH(CH_3)]_3-OH$ und deren Regioisomere und/oder $O-CH_2$-Oxiran, bevorzugt Azid ($N_3$), $O-CH_2-CH=CH_2$, $O-CH(CH_3)-CH=CH_2$, $O-CH_2-C(CH_3)=CH_2$, $O-CH_2-CH=CH(CH_3)$, $O-(CH_2)_2-CH=CH_2$, $O-(CH_2)_4-CH=CH_2$, $O-(CH_2)_6-CH=CH_2$, $O-CH_2-C\equiv CH$, $O-CH_2-C\equiv C(CH_3)$, $O-(CH_2)_2-C\equiv C(CH_3)$, $O-(CH_2)_4-C\equiv C(CH_3)$, $O-(CH_2)_6-C\equiv C(CH_3)$, $O-CH_2-C\equiv N$, $O-(CH_2)_2-C\equiv N$, $O-(CH_2)_3-C\equiv N$,

$O-(CH_2)_4-C{\equiv}N$, $O-(CH_2)_5-C{\equiv}N$, $O-(CH_2)_6-C{\equiv}N$, $O-(CH_2)_2-OH$, $O-(CH_2)_3-OH$, $O-(CH_2)_4-OH$, $O-(CH_2)_5-OH$, $O-(CH_2)_6-OH$, $O-(CH_2)_7-OH$, $O-(CH_2)_8-OH$, $O-CH_2-CH(CH_3)-OH$, $O-CH(CH_3)-CH_2-OH$, $(O-CH_2-CH_2)_2-OH$, $(O-CH_2-CH_2)_3-OH$, $[O-CH_2-CH(CH_3)]_2-OH$ und deren Regioisomere, $[O-CH_2-CH(CH_3)]_3-OH$ und deren Regioisomere und/oder $O-CH_2$-Oxiran, besonders bevorzugt Azid ($N_3$), $O-CH_2-CH{=}CH_2$, $O-CH_2-C{\equiv}CH$, $O-(CH_2)_2-OH$, $O-(CH_2)_4-OH$, $O-CH_2-CH(CH_3)-OH$, $O-CH(CH_3)-CH_2-OH$, $(O-CH_2-CH_2)_2-OH$ und/oder $O-CH_2$-Oxiran;

und mit einer mit einer zahlenmittleren Anzahl an Polyoxymethylenwiederholungseinheiten n von 3 bis 25 bevorzugt 4 bis 18 und besonders bevorzugt von 5 bis 12 beträgt, wobei die Anzahl an Polyoxymethylenwiederholungseinheiten mittels der im Experimentalteil offenbarten Protonenresonanzspektroskopie bestimmt worden ist.

In einer Ausführung der Erfindung hat das Präpolymer (E) eine Onset-Temperatur von 105 °C bis 300 °C bevorzugt von 125 °C bis 300 °C, besonders bevorzugt von 145 °C bis 300 °C, wobei die Onset-Temperatur mittels der im Experimentalteil offenbarten Methode bestimmt wurde.

Ein weiterer Gegenstand der Erfindung ist ein Verfahren zur Herstellung eines Präpolymers (E) umfassend der Umsetzung des Präpolymers (A) gemäß einem der Ansprüche 1 bis 8 mit einer Verbindung (F) optional in Gegenwart eines Katalysators (G) und optional in einem Lösungsmittel (H),

wobei die Verbindung (F) eine gegenüber der Gruppe (A-1) des Präpolymers (A, bevorzugt der Cl-Gruppe des Präpolymers (A) reaktive, nucleophile Gruppe (F-1) aufweist,

wobei die reaktive, nucleophile Gruppe (F-1) Azid ($N_3$), $O-CO-CH{=}CH_2$, $O-CO-C(CH_3){=}CH_2$, $O-CO-CH{=}CH(CH_3)$, $O-CO-CH_2-CH{=}CH_2$, $O-CO-CH_2-C(CH_3){=}CH_2$, $O-CO-CH_2-CH{=}CH(CH_3)$, $O-CO-O-CH_2-CH{=}CH_2$, $O-CO-O-CH_2-C(CH_3){=}CH_2$, $O-CO-O-CH_2-CH{=}CH(CH_3)$, $O-CO-C{\equiv}CH$, $O-CO-CH_2-C{\equiv}CH$, $O-CO-C{\equiv}N$, $O-CO-CH_2-C{\equiv}N$, $O-CO-(CH_2)_5-OH$, O-CO-Oxiran, $O-CO-CH_2$-Oxiran, $O-CH_2-CH{=}CH_2$, $O-CH(CH_3)-CH{=}CH_2$, $O-CH_2-C(CH_3){=}CH_2$, $O-CH_2-CH{=}CH(CH_3)$, $O-(CH_2)_2-CH{=}CH_2$, $O-(CH_2)_4-CH{=}CH_2$, $O-(CH_2)_6-CH{=}CH_2$, $O-CH_2-C{\equiv}CH$, $O-CH_2-C{\equiv}C(CH_3)$, $O-(CH_2)_2-C{\equiv}C(CH_3)$, $O-(CH_2)_4-C{\equiv}C(CH_3)$, $O-(CH_2)_6-C{\equiv}C(CH_3)$, $O-CH_2-C{\equiv}N$, $O-(CH_2)_2-C{\equiv}N$, $O-(CH_2)_3-C{\equiv}N$, $O-(CH_2)_4-C{\equiv}N$, $O-(CH_2)_5-C{\equiv}N$, $O-(CH_2)_6-C{\equiv}N$, $O-(CH_2)_2-OH$, $O-(CH_2)_3-OH$, $O-(CH_2)_4-OH$, $O-(CH_2)_5-OH$, $O-(CH_2)_6-OH$, $O-(CH_2)_7-OH$, $O-(CH_2)_8-OH$, $O-CH_2-CH(CH_3)-OH$, $O-CH(CH_3)-CH_2-OH$, $(O-CH_2-CH_2)_2-OH$, $(O-CH_2-CH_2)_3-OH$, $[O-CH_2-CH(CH_3)]_2-OH$, $[O-CH_2-CH(CH_3)]_3-OH$ und $O-CH_2$-Oxiran, bevorzugt Azid ($N_3$), $O-CH_2-CH{=}CH_2$, $O-CH(CH_3)-CH{=}CH_2$, $O-CH_2-C(CH_3){=}CH_2$, $O-CH_2-CH{=}CH(CH_3)$, $O-(CH_2)_2-CH{=}CH_2$, $O-(CH_2)_4-CH{=}CH_2$, $O-(CH_2)_6-CH{=}CH_2$, $O-CH_2-C{\equiv}CH$, $O-CH_2-C{\equiv}C(CH_3)$, $O-(CH_2)_2-C{\equiv}C(CH_3)$, $O-(CH_2)_4-C{\equiv}C(CH_3)$, $O-(CH_2)_6-C{\equiv}C(CH_3)$, $O-CH_2-C{\equiv}N$, $O-(CH_2)_2-C{\equiv}N$, $O-(CH_2)_3-C{\equiv}N$, $O-(CH_2)_4-C{\equiv}N$, $O-(CH_2)_5-C{\equiv}N$, $O-(CH_2)_6-C{\equiv}N$, $O-(CH_2)_2-OH$, $O-(CH_2)_3-OH$, $O-(CH_2)_4-OH$, $O-(CH_2)_5-OH$, $O-(CH_2)_6-OH$, $O-(CH_2)_7-OH$, $O-(CH_2)_8-OH$, $O-CH_2-CH(CH_3)-OH$, $O-CH(CH_3)-CH_2-OH$, $(O-CH_2-CH_2)_2-OH$, $(O-CH_2-CH_2)_3-OH$, $[O-CH_2-CH(CH_3)]_2-OH$, $[O-CH_2-CH(CH_3)]_3-OH$ und $O-CH_2$-Oxiran und besonders bevorzugt Azid ($N_3$), $O-CH_2-CH{=}CH_2$, $O-CH_2-C{\equiv}CH$, $O-(CH_2)_2-OH$, $O-(CH_2)_4-OH$, $O-CH_2-CH(CH_3)-OH$, $O-CH(CH_3)-CH_2-OH$, $(O-CH_2-CH_2)_2-OH$ und $O-CH_2$-Oxiran ist.

Präpolymere (E) im Sinne der Erfindung bezeichnen hierbei Reaktionsprodukte erhältlich aus der Umsetzung des erfindungsgemäßen Präpolymers (A) mit einer Verbindung (F), wobei die Verbindung (F) eine gegenüber der Gruppe (A-1) reaktive, nucleophile Gruppe (F-1) aufweist. Beispielweise sind Azid-Gruppen terminierte Präpolymere (E) durch Umsetzung eines Clterminierten Präpolymers (A) mit einem Überschuss an Natriumazid ($NaN_3$) als Verbindung (F) und Azid (N3) als nucleophile Gruppe (F-1) erhältlich.

In einer Ausführungsform des erfindungsgemäßen Verfahrens ist die Verbindung (F) eine oder mehrere Verbindungen und wird ausgewählt aus der Gruppe bestehend aus $LiN_3$, $NaN_3$, $KN_3$, $LiO-CO-CH{=}CH_2$, $LiO-CO-C(CH_3){=}CH_2$, $LiO-CO-CH{=}CH(CH_3)$, $LiO-CO-CH_2-CH{=}CH_2$, $LiO-CO-CH_2-C(CH_3){=}CH_2$, $LiO-CO-CH_2-CH{=}CH(CH_3)$, $LiO-CO-O-CH_2-CH{=}CH_2$, $LiO-CO-O-CH_2-C(CH_3){=}CH_2$, $LiO-CO-O-CH_2-CH{=}CH(CH_3)$, $LiO-CO-C{\equiv}CH$, $LiO-CO-CH_2-C{\equiv}CH$, HO-CO-C=N, $LiO-CO-CH_2-C{\equiv}N$, $LiO-CO-(CH_2)_5-OH$, LiO-CO-Oxiran, $LiO-CO-CH_2$-Oxiran, $NaO-CO-CH{=}CH_2$, $NaO-CO-C(CH_3){=}CH_2$, $NaO-CO-CH{=}CH(CH_3)$, $NaO-CO-CH_2-CH{=}CH_2$, $NaO-CO-CH_2-C(CH_3){=}CH_2$, $NaO-CO-CH_2-CH{=}CH(CH_3)$, $NaO-CO-O-CH_2-CH{=}CH_2$, $NaO-CO-O-CH_2-C(CH_3){=}CH_2$, $NaO-CO-O-CH_2-CH{=}CH(CH_3)$, $NaO-CO-C{\equiv}CH$, $NaO-CO-CH_2-C{\equiv}CH$, NaO-CO-C=N, $HO-CO-CH_2-C{\equiv}N$, $NaO-CO-(CH_2)_5-OH$, NaO-CO-Oxiran, $NaO-CO-CH_2$-Oxiran, $KO-CO-CH{=}CH_2$, $KO-CO-C(CH_3){=}CH_2$, $KO-CO-CH{=}CH(CH_3)$, $KO-CO-CH_2-CH{=}CH_2$, $KO-CO-CH_2-C(CH_3){=}CH_2$, $KO-CO-CH_2-CH{=}CH(CH_3)$, $KO-CO-O-CH_2-CH{=}CH_2$, $KO-CO-O-CH_2-C(CH_3){=}CH_2$, $KO-CO-O-CH_2-CH{=}CH(CH_3)$, KO-CO-C=CH, $KO-CO-CH_2-C{\equiv}CH$, KO-CO-C=N, $KO-CO-CH_2-C{\equiv}N$, $KO-CO-(CH_2)_5-OH$, KO-CO-Oxiran, $KO-CO-CH_2$-Oxiran, $LiO-CH_2-CH{=}CH_2$, $LiO-CH(CH_3)-CH{=}CH_2$, $LiO-CH_2-C(CH_3){=}CH_2$, $LiO-CH_2-CH{=}CH(CH_3)$, $LiO-(CH_2)_2-CH{=}CH_2$, $LiO-(CH_2)_4-CH{=}CH_2$, $LiO-(CH_2)_6-CH{=}CH_2$, $LiO-CH_2-C{\equiv}CH$, $LiO-CH_2-C{\equiv}C(CH_3)$, $LiO-(CH_2)_2-C{\equiv}C(CH_3)$, $LiO-(CH_2)_4-C{\equiv}C(CH_3)$, $LiO-(CH_2)_6-C{\equiv}C(CH_3)$, $LiO-CH_2-C{\equiv}N$, $LiO-(CH_2)_2-C{\equiv}N$, $LiO-(CH_2)_3-C{\equiv}N$, $LiO-(CH_2)_4-C{\equiv}N$, $LiO-(CH_2)_5-C{\equiv}N$, $LiO-(CH_2)_6-C{\equiv}N$, $LiO-(CH_2)_2-OH$, $LiO-(CH_2)_3-OH$, $LiO-(CH_2)_4-OH$,

$LiO-(CH_2)_5-OH$, $LiO-(CH_2)_6-OH$, $LiO-(CH_2)_7-OH$, $LiO-(CH_2)_8-OH$, $LiO-CH_2-CH(CH_3)-OH$, $LiO-CH(CH_3)-CH_2-OH$, $Li-(O-CH_2-CH_2)_2-OH$, $Li-(O-CH_2-CH_2)_3-OH$, $Li-[O-CH_2-CH(CH_3)]_2-OH$, $Li-[O-CH_2-CH(CH_3)]_3-OH$ und, $LiO-CH_2$-Oxiran, $NaO-CH_2-CH=CH_2$, $NaO-CH(CH_3)-CH=CH_2$, $NaO-CH_2-C(CH_3)=CH_2$, $NaO-CH_2-CH=CH(CH_3)$, $NaO-(CH_2)_2-CH=CH_2$, $NaO-(CH_2)_4-CH=CH_2$, $NaO-(CH_2)_6-CH=CH_2$, $NaO-CH_2-C\equiv CH$, $NaO-CH_2-C\equiv C(CH_3)$, $NaO-(CH_2)_2-C\equiv C(CH_3)$, $NaO-(CH_2)_4-C\equiv C(CH_3)$, $NaO-(CH_2)_6-C\equiv C(CH_3)$, $NaO-CH_2-C\equiv N$, $NaO-(CH_2)_2-C=N$, $NaO-(CH_2)_3-C\equiv N$, $NaO-(CH_2)_4-C\equiv N$, $NaO-(CH_2)_5-C\equiv N$, $NaO-(CH_2)_6-C\equiv N$, $NaO-(CH_2)_2-OH$, $NaO-(CH_2)_3-OH$, $NaO-(CH_2)_4-OH$, $NaO-(CH_2)_5-OH$, $NaO-(CH_2)_6-OH$, $NaO-(CH_2)_7-OH$, $NaO-(CH_2)_8-OH$, $NaO-CH_2-CH(CH_3)-OH$, $NaO-CH(CH_3)-CH_2-OH$, $Na-(O-CH_2-CH_2)_2-OH$, $Na-(O-CH_2-CH_2)_3-OH$, $Na-[O-CH_2-CH(CH_3)]_2-OH$, $Na-[O-CH_2-CH(CH_3)]_3-OH$ und, $NaO-CH_2$-Oxiran, $KOCH_2-CH=CH_2$, $KO-CH(CH_3)-CH=CH_2$, $KO-CH_2-C(CH_3)=CH_2$, $KO-CH_2-CH=CH(CH_3)$, $KO-(CH_2)_2-CH=CH_2$, $KO-(CH_2)_4-CH=CH_2$, $KO-(CH_2)_6-CH=CH_2$, $KO-CH_2-C\equiv H$, $KO-CH_2-C\equiv C(CH_3)$, $KO-(CH_2)_2-C\equiv C(CH_3)$, $KO-(CH_2)_4-C\equiv C(CH_3)$, $KO-(CH_2)_6-C\equiv C(CH_3)$, $KO-CH_2-C\equiv N$, $KO-(CH_2)_2-C\equiv N$, $KO-(CH_2)_3-C\equiv N$, $KO-(CH_2)_4-C\equiv N$, $KO-(CH_2)_5-C\equiv N$, $KO-(CH_2)_6-C\equiv N$, $KO-(CH_2)_2-OH$, $KO-(CH_2)_3-OH$, $KO-(CH_2)_4-OH$, $KO-(CH_2)_5-OH$, $KO-(CH_2)_6-OH$, $KO-(CH_2)_7-OH$, $KO-(CH_2)_8-OH$, $KO-CH_2-CH(CH_3)-OH$, $KO-CH(CH_3)-CH_2-OH$, $K-(O-CH_2-CH_2)_2-OH$, $K-(O-CH_2-CH_2)_3-OH$, $K-[O-CH_2-CH(CH_3)]_2-OH$, $K-[O-CH_2-CH(CH_3)]_3-OH$ und, $KO-CH_2$-Oxiran, bevorzugt $LiN_3$, $NaN_3$, $KN_3$, $LiO-CH_2-CH=CH_2$, $LiO-CH(CH_3)-CH=CH_2$, $LiO-CH_2-C(CH_3)=CH_2$, $LiO-CH_2-CH=CH(CH_3)$, $LiO-(CH_2)_2-CH=CH_2$, $LiO-(CH_2)_4-CH=CH_2$, $LiO-(CH_2)_6-CH=CH_2$, $LiO-CH_2-C\equiv CH$, $LiO-CH_2-C\equiv C(CH_3)$, $LiO-(CH_2)_2-C\equiv C(CH_3)$, $LiO-(CH_2)_4-C\equiv C(CH_3)$, $LiO-(CH_2)_6-C\equiv C(CH_3)$, $LiO-CH_2-C\equiv N$, $LiO-(CH_2)_2-C\equiv N$, $LiO-(CH_2)_3-C\equiv N$, $LiO-(CH_2)_4-C\equiv N$, $LiO-(CH_2)_5-C=N$, $LiO-(CH_2)_6-C\equiv N$, $LiO-(CH_2)_2-OH$, $LiO-(CH_2)_3-OH$, $LiO-(CH_2)_4-OH$, $LiO-(CH_2)_5-OH$, $LiO-(CH_2)_6-OH$, $LiO-(CH_2)_7-OH$, $LiO-(CH_2)_8-OH$, $LiO-CH_2-CH(CH_3)-OH$, $LiO-CH(CH_3)-CH_2-OH$, $Li-(O-CH_2-CH_2)_2-OH$, $Li-(O-CH_2-CH_2)_3-OH$, $Li-[O-CH_2-CH(CH_3)]_2-OH$, $Li-[O-CH_2-CH(CH_3)]_3-OH$ und, $LiO-CH_2$-Oxiran, $NaO-CH_2-CH=CH_2$, $NaO-CH(CH_3)-CH=CH_2$, $NaO-CH_2-C(CH_3)=CH_2$, $NaO-CH_2-CH=CH(CH_3)$, $NaO-(CH_2)_2-CH=CH_2$, $NaO-(CH_2)_4-CH=CH_2$, $NaO-(CH_2)_6-CH=CH_2$, $NaO-CH_2-C\equiv CH$, $NaO-CH_2-C\equiv C(CH_3)$, $NaO-(CH_2)_2-C\equiv C(CH_3)$, $NaO-(CH_2)_4-C\equiv C(CH_3)$, $NaO-(CH_2)_6-C\equiv C(CH_3)$, $NaO-CH_2-C\equiv N$, $NaO-(CH_2)_2-C\equiv N$, $NaO-(CH_2)_3-C\equiv N$, $NaO-(CH_2)_4-C\equiv N$, $NaO-(CH_2)_5-C\equiv N$, $NaO-(CH_2)_6-C\equiv N$, $NaO-(CH_2)_2-OH$, $NaO-(CH_2)_3-OH$, $NaO-(CH_2)_4-OH$, $NaO-(CH_2)_5-OH$, $NaO-(CH_2)_6-OH$, $NaO-(CH_2)_7-OH$, $NaO-(CH_2)_8-OH$, $NaO-CH_2-CH(CH_3)-OH$, $NaO-CH(CH_3)-CH_2-OH$, $Na-(O-CH_2-CH_2)_2-OH$, $Na-(O-CH_2-CH_2)_3-OH$, $Na-[O-CH_2-CH(CH_3)]_2-OH$, $Na-[O-CH_2-CH(CH_3)]_3-OH$ und, $NaO-CH_2$-Oxiran, $KO-CH_2-CH=CH_2$, $KO-CH(CH_3)-CH=CH_2$, $KO-CH_2-C(CH_3)=CH_2$, $KO-CH_2-CH=CH(CH_3)$, $KO-(CH_2)_2-CH=CH_2$, $KO-(CH_2)_4-CH\equiv CH_2$, $KO-(CH_2)_6-CH=CH_2$, $KO-CH_2-C\equiv H$, $KO-CH_2-C\equiv C(CH_3)$, $KO-(CH_2)_2-C\equiv C(CH_3)$, $KO-(CH_2)_4-C\equiv C(CH_3)$, $KO-(CH_2)_6-C\equiv C(CH_3)$, $KO-CH_2-C\equiv N$, $KO-(CH_2)_2-C\equiv N$, $KO-(CH_2)_3-C\equiv N$, $KO-(CH_2)_4-C\equiv N$, $KO-(CH_2)_5-C\equiv N$, $KO-(CH_2)_6-C\equiv N$, $KO-(CH_2)_2-OH$, $KO-(CH_2)_3-OH$, $KO-(CH_2)_4-OH$, $KO-(CH_2)_5-OH$, $KO-(CH_2)_6-OH$, $KO-(CH_2)_7-OH$, $KO-(CH_2)_8-OH$, $KO-CH_2-CH(CH_3)-OH$, $KO-CH(CH_3)-CH_2-OH$, $K-(O-CH_2-CH_2)_2-OH$, $K-(O-CH_2-CH_2)_3-OH$, $K-[O-CH_2-CH(CH_3)]_2-OH$, $K-[O-CH_2-CH(CH_3)]_3-OH$ und, $KO-CH_2$-Oxiran, besonders bevorzugt, $LiN_3$, $LiO-CH_2-CH=CH_2$, $LiO-CH_2-C\equiv CH$, $LiO-(CH_2)_2-OH$, $LiO-(CH_2)_4-OH$, $LiO-CH_2-CH(CH_3)-OH$, $LiO-CH(CH_3)-CH_2-OH$, $Li-(O-CH_2-CH_2)_2-OH$ und $LiO-CH_2$-Oxiran, $NaN_3$, $NaO-CH_2-CH=CH_2$, $NaO-CH_2-C\equiv CH$, $NaO-(CH_2)_2-OH$, $NaO-(CH_2)_4-OH$, $NaO-CH_2-CH(CH_3)-OH$, $NaO-CH(CH_3)-CH_2-OH$, $Na-(O-CH_2-CH_2)_2-OH$ und $NaO-CH_2$-Oxiran, $KN_3$, $KO-CH_2-CH=CH_2$, $KO-CH_2-C\equiv H$, $KO-(CH_2)_2-OH$, $KO-(CH_2)_4-OH$, $KO-CH_2-CH(CH_3)-OH$, $KO-CH(CH_3)-CH_2-OH$, $K-(O-CH_2-CH_2)_2-OH$ und $KO-CH_2$-Oxiran.

In einer weniger bevorzugten Ausführungsform des erfindungsgemäßen Verfahrens erfolgt das erfindungsgemäße Verfahren zur Herstellung des Präpolymers (E) in Gegenwart eines Katalysators (G) statt. Die Auswahl dieses Katalysators ist hierbei anhängig von der Funktionalität des Präpolymers (A) und der reaktiven, nucleophilen Gruppe (F-1) der Verbindung (F) abhängig ist.

In einer Ausführungsform des erfindungsgemäßen Verfahrens erfolgt Herstellung des Präpolymers (E) mit der Verbindung (F) optional in Gegenwart eines Katalysators (G) und optional in einem Lösungsmittel (H)

In einer Ausführungsform des erfindungsgemäßen Verfahrens ist das Lösungsmittel (H) eine oder mehrere Verbindungen und wird ausgewählt aus der Gruppe bestehend aus 1,4-Dioxan, Ethylenglycoldimethylether, Diethylenglycoldimethylether, Ethylenglycol, Diethylenglycol, Propylenglycol, Dipropylenglycol, Butandiol, Tetrahydrofuran, Dimethoxymethan, Dichlormethan, 1,2-Dichloroethan, Chloroform, Tetrachlorkohlenstoff bevorzugt Tetrahydrofuran, Dichlormethan und 1,4-Dioxan.

In einer Ausführungsform des erfindungsgemäßen Verfahrens beträgt die berechnete Konzentration des Präpolymers (A) im Lösungsmittel (H) von 1 Gew.-% bis 90 Gew.-% bevorzugt von 2 Gew.-% bis 60 Gew.-%.

In einer Ausführungsform des erfindungsgemäßen Verfahrens beträgt das Stoffmengenverhältnis der reaktiven Gruppe (A-1) des Präpolymers (A) zur reaktiven, nucleophilen Gruppe (F-1) der Verbindung (F) von 0,9:1 bis 1:20 bevorzugt von 0,95: 1 bis 1:50 und besonders bevorzugt von 0,95: 1 bis 1:20.

In einer Ausführungsform des erfindungsgemäßen Verfahrens erfolgt die Umsetzung zum Präpolymer (E) bei einer Temperatur von -80 °C bis 80 °C bevorzugt von 0 °C bis 50 °C erfolgt.

In einer Ausführungsform des erfindungsgemäßen Verfahrens erfolgt die Umsetzung zum Präpolymer (E) bei einem Druck von von 0,5 bara bis 20 bara bevorzugt von 0,9 bara bis 5 bara.

In einer Ausführungsform des erfindungsgemäßen Verfahrens erfolgt die Umsetzung zum Präpolymer (E)

innerhalb einer Reaktionszeit von 15 min bis 48 h bevorzugt von 60 min bis 20 h.

Ein weiterer Gegenstand der Erfindung ist das Präpolymer (E) erhältlich nach dem erfindungsgemäßen Verfahren.

In einer Ausführungsform der Erfindung beträgt die zahlenmittlere Anzahl an Polyoxymethylenwiederholungseinheiten des Präpolymers (E) von 3 bis 25 bevorzugt 4 bis 18 und besonders bevorzugt von 5 bis 12, wobei die Anzahl an Polyoxymethylenwiederholungseinheiten mittels der im Experimentalteil offenbarten Protonenresonanzspektroskopie bestimmt worden ist.

In einer Ausführung der Erfindung hat das Präpolymer (E) eine Onset-Temperatur von 105 °C bis 300 °C bevorzugt von 125 °C bis 300 °C, besonders bevorzugt von 145 °C bis 300 °C, wobei die Onset-Temperatur mittels der im Experimentalteil offenbarten Methode bestimmt wurde.

Ein weiterer Gegenstand der Erfindung ist Verfahren zur Herstellung des Präpolymers (I) umfassend der Umsetzung des Präpolymers (E) gemäß einem der Ansprüche 9 bis 14 mit einer Verbindung (J) optional in Gegenwart eines Katalysators (K) und optional in einem Lösungsmittel (L), wobei die Verbindung (J) ein oder mehrere Verbindungen ist und ausgewählt wird aus der Gruppe bestehend aaus $O_2$, $H_2O_2$, 2-Chlorperbenzoesäure, tert-Butylhydroxyperoxid, Natriumpercarbonat, Peroxybenzoesäure, Peroxyessigsäure, Dioxiran, 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diiso¬cyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Di-isocyanatodicyclohexylmethan (H12MDI), 4-Isocyanatomethyl-1, 8-octandiisocyanat (Triisocyanatononan, TIN), ω,ω'-Diisocyanato-1,3-dimethylcyclohexan (H6XDI), 1-Isocyanato-1-methyl-3-isocyanato-methyl¬cyclo¬¬hexan, 1-Isocyanato-1-methyl-4-isocyanatomethyl¬cyclo¬¬hexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4-Diisocyanatotoluol (TDI), 2,6-Diisocyanatotoluol (TDI)2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,5-Diisocyanatonaphthalin, 1,3-Bis(isocyanatomethyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate, bevorzugt 1,5-Diisocyanatopentan (PDI), ,6-Diisocyanatohexan (HDI), 1-Isocyanato-3,3,5-trimethyl-5-isocyanatomethylcyclohexan (Isophorondiisocyanat, IPDI), 4'-Di-isocyanatodicyclohexylmethan (H12MDI), 2,4-Diisocyanatotoluol (TDI), 2,6-Diisocyanatotoluol (TDI), 2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,3-Bis(isocyanato-methyl)benzol (XDI) deren Trimerisierungs- oder höheren Oligomerisierungsprodukte und/oder deren Addukte.

## Beispiele

**Eingesetzte Verbindungen:**

pFA-1: polymeres Paraformaldehyd (Granuform® M, (Formaldehydgehalt laut Hersteller jeweils 94.5 - 96.5%), INEOS Paraform GmbH & Co. KG).

pFA-2: modifiziertes Paraformaldehyd, hergestellt nach der Lehre von PCT/EP2021/085078, Beispiel 8, wobei eine Druckflasche mit 15.0 g polymeres Formaldehyd (Granuform® M, Formaldehydgehalt laut Hersteller jeweils 94.5 - 96.5 Gew.%, Prefere Paraform GmbH & Co. KG). und VE Wasser (30 mL) befüllt. Durch Erhitzen des Reaktionsgemisches auf 110 °C für ca. 10 Stunden wurde eine klare Formaldehydlösung erhalten (ca. 32 Gew.% Formaldehyd). Die Formaldehydlösung wurde mit Hilfe eines Rotationsverdampfer auf 87 Gew.% konzentriert: Die Temperatur des Bades betrug 40 °C, der Destillationsdruck betrug zwischen 40 bis 60 mbar mit einer Druckreduktion von 5 mbar/45 Min. Die Dauer der Destillation betrug 3 Stunden. Die erhaltene trübe Suspension (ca. 17.3 g) wurde direkt danach in den Aufbau der Azeotroprektifikation übertragen und mit Essigsäureethylester-1 (75 mL) versetzt. Das Wasser der Formaldehydlösung wurde weiter mittels Azeotroprektifikation bei 40 °C unter vermindertem Druck (240-250 mbar) entfernt. Nach 20 Stunden wurde Cyclohexan zu der erhaltenen Suspension (150 mL) hinzugefügt. Über 5 Stunden wurde die Mischung bei 240-250 mbar und 40 °C destilliert, während 150 mL Cyclohexan während des genannten Zeitraums portionsweise zur Mischung gegeben wurden. Das Produkt wurde durch Filtration als farbloser Feststoff gewonnen und anschließend getrocknet. Eine Probe des erhaltenen Produktes wurde vollständig in DMSO-d6 gelöst und anschließend mit Hilfe von $^1$H-NMR Spektroskopie charakterisiert: (Polyoxymethylengruppengehalt: n = 8.2, Freier Wassergehalt: 0.3 Gew.%.)

DMSO-d6 (99.80% D, Euriso-Top GmbH, getrocknet über 4 Å Molsieb)

Dimethoxymethan, DMM (99.9%, Sigma-Aldrich, über $CaH_2$ getrocknet, destilliert und über 4 Å Molsieb gelagert)
1,4-Dioxan (99.9%, Sigma-Aldrich, über $CaH_2$ getrocknet, destilliert und über 4 Å Molsieb gelagert) 2,6-Lutidin (≥99%, Sigma-Aldrich, keine Vorbehandlung)
Tetrahydrofuran (99.9%, Sigma-Aldrich, über $CaH_2$ getrocknet, destilliert und über 4 Å Molsieb gelagert)
THF (Tetrahydrofuran, ≥99.0%, Sigma-Aldrich, keine Vorbehandlung)
Dichlormethan (≥99.8% wasserfrei, Sigma-Aldrich, keine Vorbehandlung)
n-Pentan (>99%, Acros Organics, getrocknet über 4 Å Molsieb)
Pyridin (99.9%, Sigma-Aldrich, keine Vorbehandlung)
Thionylchlorid (≥99%, Sigma-Aldrich, keine Vorbehandlung)
Natriumhydrid (90%, Sigma-Aldrich, keine Vorbehandlung)
Allylalkohol (≥99%, Sigma-Aldrich, getrocknet über 4 Å Molsieb)
Lithium-bis(trimethylsilyl)amid (LiHMDS) Lösung 1.0 M in Tetrahydrofuran (Sigma-Aldrich, keine Vorbehandlung)
Ethylenglykol (99.8%, Acros Organics, Wasserfrei, keine Vorbehandlung)
Propylenglykol (≥99.5%, Sigma-Aldrich, keine Vorbehandlung)
Diethylenglykol (99%, Sigma-Aldrich, keine Vorbehandlung)
1,4-Butandiol (99%, Sigma-Aldrich, keine Vorbehandlung)
Glycidol (96%, Sigma-Aldrich, keine Vorbehandlung)
3-Chlorperbenzoesäure (≥70%, Sigma-Aldrich, keine Vorbehandlung)
2-Methyl-2-buten (≥95%, Sigma-Aldrich, keine Vorbehandlung)
Natriumchlorid (≥99%, Sigma-Aldrich, keine Vorbehandlung)
Natriumhydrogencarbonat (≥99.5 %, Sigma-Aldrich, keine Vorbehandlung)
Natriumsulfit (98%, Alfar Aesar, keine Vorbehandlung)
Natriumazid (≥99.5%, Sigma-Aldrich, keine Vorbehandlung)
Benzol (99.8% wasserfrei, Sigma-Aldrich, keine Vorbehandlung)
Calciumchlorid (≥98% wasserfrei, Merck, keine Vorbehandlung)
Kaliumcarbonat (≥%99%, Sigma-Aldrich, keine Vorbehandlung)
Magnesiumsulfat (≥99.5%, Sigma-Aldrich, keine Vorbehandlung)
Dioxolan (99%, Sigma-Aldrich, keine Vorbehandlung)
Tetrabutylammoniumfluorid-Trihydrdat (NBu4Fx3H2O; TBAF, 98%, Sigma-Aldrich, ohne Vorbehandlung)
Dibutylzinndilaurat (DBTL, 95%, Sigma-Aldrich, keine Vorbehandlung)
Natriumhydroxid (≥98%, Sigma-Aldrich, keine Vorbehandlung)
TDI (Desmodur T 100, Toluol-2,4-diisocyanat, >99%, Covestro Deutschland AG, keine Vorbehandlung)

**Methodenbeschreibung:**

**$^1$H-NMR-Spektroskopie:** Die Messungen erfolgten auf einem Bruker Avance III 300 (300 MHz) oder Bruker Avance III 400 (400 MHz); die Kalibrierung der chemischen Verschiebungen erfolgte relativ zum Restprotonensignal (DMSO-d6: $\delta$ $^1$H = 2.50 ppm; $CDCl_3$: $\delta$ $^1$H = 7.26 ppm); die Multiplizität der Signale wurde wie folgt angegeben: s = Singulett, m = Multiplett.

**Polyoxymethylengruppengehalt:** Der Gehalt an Polyoxymethylengruppen *n* im Präpolymer wurde mit Hilfe von $^1$H-NMR Spektroskopie bestimmt. Die relativen Gehalte der einzelnen Gruppen wurden dabei über Integration der charakteristischen Protonensignale bestimmt. Die charakteristischen Signale der Oxymethylengruppen in direkter Nachbarschaft zu den terminalen Funktionalitäten sind in Tabelle 1 dargestellt.. Nachdem das Integral des $OCH_2$*-Signals auf vier normiert wurde, lässt sich der Gehalt an Polyoxymethylengruppen n im NCO Präpolymer über folgende Formel berechnen:

$$n = \frac{\mathrm{Integral}(\mathrm{OCH_2}) + 4}{2}$$

Tabelle 1: Chemische Verschiebungen der Oxymethylengruppen in direkter Nachbarschaft zu den terminalen Funktionalitäten im 1H NMR Spektrum.

| Beispiel | Funktionalität | $\delta$ $^1$H, 4H, $OCH_2$* |
|---|---|---|
| 1,2 | dichlorid | 5.67 (DMSO) |
| 3 | dihydroxy ethyl diether | 4.82 ($CDCl_3$) |

(fortgesetzt)

| Beispiel | Funktionalität | $\delta$ $^1$H, 4H, $OCH_2$* |
|---|---|---|
| 4 | dihydroxy propyl diether | 4.78-4.83 ($CDCl_3$) |
| 5 | di(diethylenglycol) diether | 4.80 ($CDCl_3$) |
| 6 | Dihydroxy butyl diether | 4.69 (DMSO) |
| 7-9 | diallyl diether | 4.73 (DMSO) |
| 10, 12 | diepoxy diether | 4.74 (DMSO) |
| 11 | diazid | 4.88 (DMSO) |

**Bestimmung des T(onset):** Thermische Stabilitätsmessungen wurden an einem Mettler Toledo TGA/DSC 1 STARe System durchgeführt. Der Start der Zersetzung (T(onset)) ist durch einen beginnenden Masseverlust während der Messung definiert, dadurch gekennzeichnet, bei welcher minimalen Temperatur 5 Gew.-% des Materials verloren gegangen sind. Die Proben mit einer Masse von 10-15 mg wurden in einen 150 µL Aluminiumoxidtiegel überführt und unter Argonatmosphäre von 25-500 °C mit einer Geschwindigkeit von 5 K/min erhitzt.

**Beispiele für die Synthese der Präpolymere (A):**

**Beispiel 1 - Präpolymer A: Chlorierung von Paraformaldehyd mit Thionylchlorid und Pyridin als Base**

Die Reaktion wurde unter Inertatmosphäre und Verwendung üblicher Schlenklinien-Techniken durchgeführt. Eine Suspension aus Paraformaldehyd (PFA-2, 2,0 g), 1,4-Dioxan (25 ml) und Pyridin (1,2 ml) wurde in einem Schlenkkolben bei Raumtemperatur gerührt. Anschließend wurde zu der oben genannten Suspension eine Lösung aus 1,4-Dioxan (25 ml) und Thionylchlorid (1,3 ml) getropft. Das Reaktionsgemisch wurde fünf Stunden bei Raumtemperatur gerührt. Danach wurde über Kanülenfiltration filtriert, das Filtrat aufgefangen und das Lösungsmittel im Vakuum vom Filtrat entfernt, wobei ein weißer Feststoff erhalten wurde. Der Feststoff wurde mit 1,4-Dioxan extrahiert und das Lösungsmittel im Vakuum entfernt. Das Produkt wurde als weißer klebriger Feststoff erhalten, ein Teil davon in DMSO-d6 gelöst und mittels NMR-Spektroskopie charakterisiert und die thermische Stabilität mit TGA analysiert.

**Beispiel 2 - Präpolymer A: Chlorierung von Paraformaldehyd mit Thionylchlorid und 2,6-Lutidin als Base**

Die Reaktion wurde unter Inertatmosphäre und Verwendung üblicher Schlenklinien-Techniken durchgeführt. Eine Suspension aus Paraformaldehyd (PFA-2, 0,6 g), 1,4-Dioxan (15 ml) und 2,6-Lutidin (0,53 ml) wurde in einem Schlenkkolben bei Raumtemperatur gerührt. Anschließend wurde zu der oben genannten Suspension eine Lösung aus 1,4-Dioxan (10 ml) und Thionylchlorid (0,38 ml) getropft. Das Reaktionsgemisch wurde 5 Stunden bei Raumtemperatur gerührt. Danach wurde filtriert, das Filtrat aufgefangen und das Lösungsmittel im Vakuum aus dem Filtrat entfernt. Das Produkt wurde als hellbrauner Feststoff erhalten, ein Teil davon wurde in DMSO-d6 gelöst und mittels NMR-Spektroskopie charakterisiert und die thermische Stabilität mit TGA analysiert.

**Beispiele für die Synthese der Präpolymere (E):**

**Beispiel 3 - Präpolymer E: Reaktion zwischen Dichlorparaformaldehyd und Natrium-2-hydroxyethanolat**

Die Reaktion wurde unter Inertatmosphäre und Verwendung üblicher Schlenklinien-Techniken durchgeführt. Dichlorparaformaldehyd (0,3604 g) aus Beispiel 1 wurde in ein Schlenkrohr überführt und mit Dichlormethan (2 ml) gelöst. Danach wurde eine Lösung von Natrium-2-hydroxyethanolat (3 mL, 0,999 M) in Ethylenglykol, die durch Umsetzung von 90 Gew.-% Natriumhydrid (0,0799 g) mit Ethylenglykol (3 mL) hergestellt wurde, tropfenweise zugegeben und die Reaktion achtzehn Stunden bei Raumtemperatur gerührt. Zum Quenchen des verbleibenden Überschusses an Natrium-2-hydroxyethanolat wurde ein Tropfen Wasser zugegeben und die Reaktion für 30 Minuten bei Raumtemperatur gerührt. Danach wurde das Reaktionsgemisch 10 Minuten bei 5000 U/min zentrifugiert. Der Überstand wurde aufgefangen und überschüssiges Lösungsmittel am Kugelrohrdestillator bei 70 °C im Vakuum (0.15 mbar) entfernt, bis ein weißlicher klebriger Feststoff erhalten wurde. Anschließend wurde der Feststoff mit Aceton extrahiert und das Filtrat gesammelt. Überschüssiges Lösungsmittel wurde mit einem Rotationsverdampfer bei 40 °C und 400 mbar aus dem Filtrat entfernt und der erhaltene Rückstand wurde schließlich mit einem Kugelrohrdestillator bei 70 °C getrocknet. Das Produkt wurde als weißlicher klebriger Feststoff erhalten, ein Teil davon in $CDCl_3$gelöst und mittels NMR-Spektroskopie

charakterisiert und die thermische Stabilität mittels TGA analysiert.

**Beispiel 4 - Präpolymer E: Umsetzung von Dichlorparaformaldehyd mit Natrium-2-hydroxy-2-methylethanolat und Natrium-2-hydroxy-1-methylethanolat**

Die Umsetzung wurde analog zu Beispiel 3 durchgeführt, mit dem Unterschied, dass zu einer gerührte Suspension von Dichlorparaformaldehyd (0,2966 g) in Tetrahydrofuran (2 mL) in einem Schlenkrohr eine Lösung des Natriummonoalkoxids von Propylenglykol (2,7 mL, 0,9444 M) in Propylenglykol zugetropft wurde, die durch Umsetzung von 90 Gew.-% Natriumhydrid (0,068 g) mit Propylenglykol (2,7 mL) hergestellt wurde. Anschließend wurde das Produkt mit Dichlormethan aus dem erhaltenen Feststoff extrahiert. Das Produkt wurde nach entfernen von Dichlormethan als hellbrauner klebriger Feststoff erhalten, ein Teil davon in $CDCl_3$ gelöst und mittels NMR-Spektroskopie charakterisiert und die thermische Stabilität mit TGA analysiert.

**Beispiel 5 - Präpolymer E: Reaktion zwischen Dichlorparaformaldehyd und Natrium-2,2'-oxydiethanolat**

Die Umsetzung wurde analog zu Beispiel 3 durchgeführt, mit dem Unterschied, dass zu einer gerührte Suspension von Dichlorparaformaldehyd (0,4121 g) in Tetrahydrofuran (2 mL) in einem Schlenkrohr eine Lösung des Natriummonoalkoxids von Diethylenglykol (3,5 mL, 0,795 M) in Diethylenglykol, die durch Umsetzung von 90 Gew.-% Natriumhydrid (0,0742 g) mit Diethylenglykol (3,5 mL) hergestellt wurde, tropfenweise zugegeben wurde. Anschließend wurde das Produkt mit Dichlormethan aus dem erhaltenen Feststoff extrahiert. Das Produkt wurde nach entfernen von Dichlormethan als hellbrauner klebriger Feststoff erhalten, ein Teil davon in $CDCl_3$ gelöst und mittels NMR-Spektroskopie charakterisiert und die thermische Stabilität mit TGA analysiert.

**Beispiel 6 - Präpolymer E: Reaktion zwischen Dichlorparaformaldehyd und Natrium-4-hydroxybutanolat**

Die Umsetzung wurde analog zu Beispiel 3 durchgeführt, mit dem Unterschied, dass zu einer gerührte Suspension von Dichlorparaformaldehyd (0,7923 g) in Tetrahydrofuran (4 mL) in einem Schlenkrohr eine Lösung des Natriummonoalkoxids von 1,4-Butandiol (9,5 mL, 0,875 M) in 1,4-Butandiol, die durch Umsetzung von 90 Gew.-% Natriumhydrid (0,2170 g) mit 1,4-Butandiol (9,5 mL) hergestellt wurde, tropfenweise zugegeben wurde. Anschließend wurde das Produkt mit Dichlormethan aus dem erhaltenen Feststoff extrahiert. Das Produkt wurde nach entfernen von Dichlormethan und 1,4-Butandiol bei 90°C als gelber Feststoff erhalten, ein Teil davon in DMSO-d6 gelöst und mittels NMR-Spektroskopie charakterisiert und die thermische Stabilität mit TGA analysiert.

**Beispiel 7 - Präpolymer E: Reaktion zwischen Dichlorparaformaldehyd und Natriumallylalkoholat**

Die Reaktion wurde unter Inertatmosphäre und Verwendung üblicher Schlenklinientechnik durchgeführt. Dichlorparaformaldehyd (0,1195 g) aus Beispiel 1 wurde in ein Schlenkrohr überführt und mit 1,4-Dioxan (5 mL) gelöst. Danach wurde eine Lösung von Natriumprop-2-enoat (0,24 ml, 3,45 M) zugegeben, welches in situ aus Natriumhydrid (0,3139 g) mit Allylalkohol (3,0455 g) hergestellt wurde. Das Reaktionsgemisch wird 18 h bei Raumtemperatur gerührt. Zum quenchen des verbleibenden Überschuss an Alkoxid wird etwas Wasser zugegeben, filtriert, das Filtrat gesammelt und das Lösemittel aus dem Filtrat entfernt. Das Produkt wurde als weißer bis beiger Feststoff erhalten, ein Teil davon in DMSO-d6 gelöst und mittels NMR-Spektroskopie charakterisiert und die thermische Stabilität mit TGA analysiert.

**Beispiel 8 - Präpolymer E: Reaktion zwischen Dichlorparaformaldehyd und Lithiumallylalkoholat**

Die Reaktion wurde analog zu Beispiel 7 durchgeführt, mit dem Unterschied, dass Dichlorparaformaldehyd (0,1195 g) in Tetrahydrofuran (6 ml) mit einer Lösung von Lithiumprop-2-enoat in Tetrahydrofuran (8 ml) umgesetzt wurde, welche sich aus der Umsetzung von 1M LiHMDS in Tetrahydrofuran-Lösung (23 ml) mit Allylalkohol (1,6 ml) in Tetrahydrofuran (4 ml) ergibt. Das Reaktionsgemisch wird 18 h bei Raumtemperatur gerührt. Das überschüssige Alkoxid wurde durch Zugabe von Wasser gequencht. Das Rohprodukt wurde als weiß-gelblicher Feststoff erhalten. Anschließend wurde mit Dichlormethan extrahiert, vom Extrakt das Lösungsmittel entfernt und der erhaltene Feststoff mit n-Pentan gewaschen. Das Produkt wurde als weißlicher Feststoff erhalten, ein Teil davon in DMSO-d6 gelöst und mittels NMR-Spektroskopie charakterisiert und die thermische Stabilität mit TGA analysiert.

**Beispiel 9 - Präpolymer E. Reaktion zwischen Dichlorparaformaldehyd (in situ Herstellung) und Allylalkohol in Gegenwart des Kaliumcarbonats**

Die Reaktion wurde unter Umgebungsbedingungen durchgeführt. Eine Suspension aus Paraformaldehyd (pFA-2, 1,0 g) und 2,6-Lutidin (0,932 mL) in THF (15 mL) wurde mit einem Eisbad gekühlt. Zu der genannten Suspension wurde unter Rühren innerhalb von 15 min eine Lösung von Thionylchlorid (0,532 mL) in THF (10 mL) zugetropft. Nach weiteren 30 min wurde die Kühlung entfernt und das Reaktionsgemisch noch 30 min bei Raumtemperatur gerührt. Der entstandene Niederschlag wurde abfiltriert und mit 10 ml THF gewaschen. Dichlorparaformaldehyd wurde direkt in Form des erhaltenen Filtrat für die nachfolgende Umsetzung verwendet. Das Filtrat wurde mit überschüssigem Allylalkohol (4,6 ml) versetzt und Kaliumcarbonat (1,38 g) zugegeben. Das Reaktionsgemisch wurde 20 h bei Raumtemperatur gerührt. Feststoffe wurden abfiltriert, das Filtrat gesammelt und das Lösungsmittel im Vakuum entfernt. Aus dem erhaltenen Rückstand wurde das Produkt mit 25 ml THF extrahiert und das Lösungsmittel im Vakuum entfernt. Das Produkt wurde als weißer Feststoff erhalten, ein Teil davon in DMSO-d6 gelöst und mittels NMR-Spektroskopie charakterisiert und die thermische Stabilität mit TGA analysiert.

**Beispiel 10 Präpolymer E: Umsetzung von Dichlorparaformaldehyd und Glycidolalkoxid**

Die Reaktion wurde analog zu Beispiel 7 durchgeführt, mit dem Unterschied, dass Dichlorparaformaldehyd (0,1977 g) in Tetrahydrofuran (1,5 ml) mit einer Suspension von Natriumglycidyloat (2,12 ml, 0,750 ml) in Tetrahydrofuran umgesetzt wurde, welches sich aus der Umsetzung von Natriumhydrid (0,0423 g) mit Glycidol (0,1244 g) in Tetrahydrofuran (2 ml) ergibt. Das Reaktionsgemisch wird 18 h bei Raumtemperatur gerührt. Das überschüssige Alkoxid wurde durch Zugabe von etwas Wasser gequencht. Das Rohprodukt wurde als weiß-gelblicher Feststoff erhalten. Anschließend wurde mit Dichlormethan extrahiert, vom Extrakt das Lösungsmittel entfernt und der erhaltene Feststoff mit n-Pentan gewaschen. Das Produkt wurde als weißlicher Feststoff erhalten, ein Teil davon in DMSO-d6 gelöst und mittels NMR-Spektroskopie charakterisiert und die thermische Stabilität mit TGA analysiert.

**Beispiel 11 - Präpolymer E: Reaktion zwischen Dichlorparaformaldehyd und Natriumazid**

Die Reaktion wurde unter Inertatmosphäre und Verwendung üblicher Schlenklinien-Techniken durchgeführt. Eine Suspension von Dichlorparaformaldehyd (0,2220 g) aus Beispiel 1 in THF (10 ml) wurde in einem Schlenkrohr im Eisbad gerührt. Zu der gekühlten Dichlorparaformaldehyd-Suspension wurde eine Lösung von Natriumazid (0,1065 g) in Wasser (0,3 mL) getropft. Es wurde kräftig gerührt (1000 U/min). Zur Bildung einer Emulsion wurden zusätzlich 0,3 ml Wasser zugegeben. Dann wurde die Reaktion auf Raumtemperatur gebracht und 18 Stunden gerührt. Das Lösungsmittel wurde im Vakuum entfernt und das Produkt mit Dichlormethan aus dem Feststoff extrahiert. Das Dichlormethan wurde im Vakuum entfernt. Das Produkt wurde als hellgelber bis weißlicher Feststoff erhalten, ein Teil davon in DMSO-d6 gelöst und mittels NMR-Spektroskopie charakterisiert und die thermische Stabilität mit TGA analysiert.

**Beispiel 12 (Vergleich): Herstellung von Diallyletherparaformaldehyd gemäß DE 1144725 B9**

Paraformaldehyd (**PFA-1**, 10 g), Allylalkohol (12,8 g), Calciumchlorid (0,56 g) und Benzol (4 ml) wurden in einem Rundkolben mit einer mit Benzol gefüllten Dean-Stark-Apparatur unter Rückfluss erhitzt. Die Reaktion wurde 24 Stunden bei 95 °C unter Rückfluss erhitzt, wobei Wasser entstand und abgetrennt wurde. Der Kolbeninhalt wurde abgekühlt und mit Wasser (3 ml), 10 Gew.-% wässriger Natronlauge (5 × 2 ml) und Wasser (3 ml) gewaschen. Die organische Fraktion wurde aufgefangen und Lösungsmittel- und Leichtsiederfraktionen am Rotationsverdampfer bei 40 °C und 35 mbar entfernt. Das Produkt wurde als Lösung in DMSO-d6 mit $^1$H-NMR und als Reinstoff mittels TGA analysiert.

**Beispiel 13 (Vergleich): Herstellung von Diallyletherparaformaldehyd gemäß DE 1144725, Bsp. 9**

Paraformaldehyd **(PFA-2,** 10 g), Allylalkohol (12,8 g), Calciumchlorid (0,56 g) und Benzol (4 ml) wurden in einem Rundkolben mit einer mit Benzol gefüllten Dean-Stark-Apparatur unter Rückfluss erhitzt. Die Reaktion wurde 24 Stunden bei 95 °C unter Rückfluss erhitzt, wobei Wasser entstand und abgetrennt wurde. Der Kolbeninhalt wurde abgekühlt und mit Wasser (3 ml), 10 Gew.-% wässriger Natronlauge (5 × 2 ml) und Wasser (3 ml) gewaschen. Die organische Fraktion wurde aufgefangen und Lösungsmittel- und Leichtsiederfraktionen am Rotationsverdampfer bei 40 °C und 35 mbar entfernt. Das Produkt wurde als Lösung in DMSO-d6 mit $^1$H-NMR und als Reinstoff mittels TGA analysiert.

**Beispiel 14 (Vergleich): Umsetzung von Granuform® M mit DMM und Toluol-2,4-diisocyanat (TDI) mittels Reaktiv-Soxhlet-Extraktion (WO 2020/099601 A1, Bsp. 1)**

Paraformaldehyd pFA-1 (Granuform® M, 10.5 g) wurde in der Extraktionshülse eines Soxhlet-Extraktors vorgelegt. Durch Soxhlet-Extraktion mit Dimethoxymethan als Lösungsmittel (200 mL) wurde polymeres Formaldehyd unter Rückfluss (60 °C Ölbadtemperatur) extrahiert und im darunterliegenden Kolben mit einem Überschuss TDI zur Reaktion gebracht (12,1 g). Nach 66 Stunden Extraktionszeit wurde das Lösungsmittel unter vermindertem Druck entfernt und

der Rückstand mit getrocknetem *n*-Pentan gewaschen und das Reaktionsprodukt als farbloser Feststoff erhalten. Das Produkt wurde als Lösung in DMSO-d6 mit $^{1}$H-NMR und als Reinstoff mittels TGA analysiert.

**Beispiel 15 (Vergleich): Herstellung eines Carbamat-geschützten Polyoxymethylen-Polyols durch Umsetzung von Paraformaldehyd mit 4-Tolylisocyanat unter Verwendung eines Fluorid-Salzes (EP3498743 A1, Bsp. 1):**

In einen Kolben wurde 450 mg (1 mmol) Paraformaldehyd (PFA-1) in 15 mL Dioxolan vorgelegt. Zu der Suspension wurde 315 mg (1 mmol) Tetrabutylammmoniumfluorid-Trihydrat (NBu4F × 3H2O, TBAF) und 6 mg (0,01 mmol) Dubitylzinndilaurat (DBTL) zugegeben und unter Rühren auf 60 °C erwärmt. Zu dem Gemisch wurde 1070 mg (8 mmol) 4-Tolylisocyanat zugegeben und das Reaktionsgemisch über 15 Minuten bei 5000 rpm wurde ein weißer Feststoff von der oberen flüssigen Phase abgetrennt. Aus der flüssigen Phase wurde das Lösungsmittel in einem partiellem Vakuum entfernt und das Produktgemisch als weißer Feststoff erhalten. Ausbeute: 1200 mg (29% unter Berücksichtigung von 720 mg Harnstoff und 260 mg TBAF). Das Produkt wurde als Lösung in DMSO-d6 mit $^{1}$H-NMR und als Reinstoff mittels TGA analysiert.

Charakterisierung:

Beispiel 16 (Vergleich): Umsetzung von pFA (Granuform® **M) mit Toluoldiisocyanat (TDI) gemäß Beispiel 2 aus US 3575930 A1 (Nachstellung US3575930, Bsp. 2)**

Paraformaldehyd (PFA-1, 10 g) wurde in einen Kolben mit 90 g Dioxan für 2 min aufgekocht und filtriert. Die so gewonnene Lösung wurde mit 20 mL Benzol versetzt und mit Hilfe einer Azeotropdestillation getrocknet. Anschließend wurden 16,7 g TDI zugesetzt und das Reaktionsgemisch für 6 h auf 91 °C gebracht. Im Gegensatz zu Beispiel 2 aus US 3575930 A1, konnte kein polymeres Produkt direkt aus der Reaktionslösung abfiltriert werden. Auch nach Entfernung der flüchtigen Bestandteile bei 35° C und 10 mbar wurde kein polymeres Produkt oder NCO-Präpolymer erhalten. Das $^{1}$H NMR Spektrum dieses gelben Rückstands zeigte lediglich Signale, die TDI zugeschrieben werden können. Es konnte kein Aufbau von Polymeren mit NCO-Gruppen oder NCO-Präpolymere beobachtet werden.

**Beispiel 17 - Präpolymer I: Epoxidierung von Diallyletherparaformaldehyd**

Diallyletherparaformaldehyd (0,1115 g; Produkt aus Beispiel 7) und Dichlormethan (3,5 ml) wurden in ein Schlenkrohr überführt und gerührt. Zu dem rührenden Diallyletherparaformaldehyd-Gemisch wurde eine Lösung von 3-Chlorperbenzoesäure (0,4791 g) in Dichlormethan (3,5 ml) gegeben und die Reaktion 72 Stunden bei Raumtemperatur gerührt. Das überschüssige Peroxid wurde durch Zugabe von 2-Methyl-2-buten (0,2 ml, 1,89 mmol) und 2 h Rühren bei Raumtemperatur gequencht. Anschließend wurde mittels Spritzenfilter filtriert, das Filtrat aufgefangen und dreimal je mit gesättigtem wässrigem Natriumsulfit, mit wässrigem Natriumhydrogencarbonat (5 Gew.-%), mit gesättigtem wässrigem Natriumhydrogencarbonat und Sole gewaschen. Die organische Fraktion wurde gesammelt, über Magnesiumsulfat getrocknet und filtriert. Das Filtrat wurde gesammelt und vom Lösemittel und flüchtigen Komponenten befreit. Das Produkt wurde als weißer Feststoff erhalten, ein Teil davon in DMSO-d6 gelöst und mittels NMR-Spektroskopie charakterisiert und die thermische Stabilität mit TGA analysiert.

**Tabelle 2. Vergleichende Daten für die Herstellung des Präpolymers (A)**

| Beispiel | (A-1) | Verbindung (B) | Hydroxylgruppen-reaktive Gruppe (B-1) | Verbindung (C) | zahlenmittleren Anzahl an Polyoxymethylenwiederholungseinheiten n, $^1H$ NMR |
|---|---|---|---|---|---|
| 1 | -Cl | Thionylchlorid | -Cl | Pyridin | 8,6 |
| 2 | -Cl | Thionylchlorid | -Cl | 2,6-Lutidin | 10,6 |

**Tabelle 3. Vergleichende Daten für die Herstellung des Präpolymers (E)**

| Beispiel | Präpolymer (A) | Verbindung (F) | zahlenmittleren Anzahl an Polyoxymethylenwiederholungseinheiten n, $^1H$ NMR | T (onset) (°C) |
|---|---|---|---|---|
| 3 | Bsp. 1 | NaO-($CH_2$-$CH_2$)-OH | 7,9 | 184 |
| 4 | Bsp. 1 | NaO-($CH_2$-C($CH_3$) H)-OH | 10,4 | 235 |
| 5 | Bsp. 1 | NaO-($CH_2$-$CH_2$-O)$_2$-H | 8,3 | 210 |
| 6 | Bsp. 1 | NaO-($CH_2$-$CH_2$)$_2$-OH | 7,3 | 215 |
| 7 | Bsp. 1 | NaO-$CH_2$-CH=$CH_2$ | 8,6 | 244 |
| 8 | Bsp. 1 | LiO-$CH_2$-CH=$CH_2$ | 8,6 | 244 |
| 9 | Bsp. 1 | KO-$CH_2$-CH=$CH_2$ | 8,7 | 244 |
| 10 | Bsp. 1 | NaO-$CH_2$-(CH-$CH_2$) oxid* | 9,1 | 204 |
| 11 | Bsp. 1 | $NaN_3$ | 10,0 | 150 |
| *Epoxidstruktur | | | | |

**Tabelle 4. Vergleichsversuche gemäß Stand der Technik**

| Beispiel | Verbindung (B) | Lösemittel | zahlenmittleren Anzahl an Polyoxymethylenwiederholungseinheiten n, $^1H$ NMR (n) | T (onset) (°C) |
|---|---|---|---|---|
| 12 (Vgl) | Allylalkohol; | Benzol | 3,0 | 70 |
| 13 (Vgl) | Allylalkohol; | Benzol | 3,0 | 70 |
| 14 (Vgl) | TDI | DMM | 10,0 | 102 |
| 15 (Vgl) | 4-Tolylisocyanat; | Dioxolan | 16,0 | 92 |
| 16 (Vgl) | TDI | Dioxan / Benzol | - | - |

**Tabelle 5. Vergleichende Daten für die Herstellung des Präpolymers (I)**

| Beispiel | Präpolymer (E) | Verbindung (J) | zahlenmittleren Anzahl an Polyoxymethylenwiederholungseinheiten n, $^1H$ NMR | T (onset) (°C) |
|---|---|---|---|---|
| 17 | Beispiel 7 | 3 -Chlorperbenzoesäure | 10,9 | 204 |

## Patentansprüche

**1.** Präpolymer (A) umfassend einen Polyoxymethylen-Block umfassend folgende Struktur

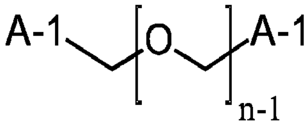

mit A-1 = Cl, Br, I, $O-SO_2-C_6H_4-CH_3$ (OTs), $O-SO_2-CH_3$ (OMs) und/oder $O-SO_2-CF_3$ (OTf) bevorzugt Cl; und mit einer mit einer zahlenmittleren Anzahl an Polyoxymethylenwiederholungseinheiten n von 3 bis 25 bevorzugt 4 bis 18 und besonders bevorzugt von 5 bis 12 beträgt, wobei die Anzahl an Polyoxymethylenwiederholungseinheiten mittels der im Experimentalteil offenbarten Protonenresonanzspektroskopie bestimmt worden ist.

**2.** Verfahren zur Herstellung eines Präpolymers (A) umfassend einen Polyoxymethylen-Block durch Umsetzung von polymerem Formaldehyd mit einer Verbindung (B) optional in Gegenwart einer Verbindung (C) und optional in einem Lösungsmittel (D),

wobei das polymerem Formaldehyd ein oder mehrere, bevorzugt 2 oder 3 und besonders bevorzugt 2 terminale Hydroxylgruppen aufweist,
wobei das Präpolymers (A) ein oder mehrere bevorzugt zwei reaktive Gruppe (A-1) aufweist, wobei die reaktiven Gruppen (A-1) Cl, Br, I, $O-SO_2-C_6H_4-CH_3$ (OTs), $O-SO_2-CH_3$ (OMs) und/oder $O-SO_2-CF_3$ (OTf) bevorzugt Cl sind;
wobei die Verbindung (B) ein oder mehrere bevorzugt ein oder zwei reaktive Gruppe (B-1) sowie aufweist, wobei die reaktiven Gruppen (B-1) Cl, Br, I, $O-SO_2-C_6H_4-CH_3$ (OTs), $O-SO_2-CH_3$ (OMs) und/oder $O-SO_2-CF_3$ (OTf) bevorzugt Cl ist
und wobei die die Verbindung (B) ein oder mehrere bevorzugt ein oder zwei Hydroxylgruppen-reaktive Gruppe (B-2) sowie aufweist.

**3.** Verfahrens gemäß Anspruch 2, wobei die die Verbindung (B) eine oder mehrere Verbindungen ist und ausgewählt wird aus der Gruppe bestehend aus $PCl_5$, $PCl_3$, $POCl_3$, $PCl_5$, $PBr_3$, $POBr_3$, $PBr_3$, $PI_3$, $SOCl_2$, $SOBr_2$, p-Toluolsulfonsäurechlorid, p-Toluolsulfonsäurebromid Methansulfonylchlorid, Methansulfonylbromid und Trifluormethansulfonsäure-anhydrid bevorzugt $SOCl_2$.

**4.** Verfahren gemäß Anspruch 2 oder 3, wobei das Stoffmengenverhältnis der terminalen Hydroxylgruppen des polymeren Formaldehyds zur Verbindung (B) von 0,9:1,0 bis 1,0:10,9 bevorzugt von 0,95:1,0 bis 1,0:2,0 besonders bevorzugt von 1,0:1,0 bis 1,0:1,2 beträgt.

**5.** Verfahren gemäß einem der Ansprüche 2 bis 4, wobei die Verbindung (C) eine Base ist und die Base eine oder mehrere Verbindungen ist und ausgewählt wird aus der Gruppe bestehend aus Pyridin, 2-Picolin, 3-Picolin, 4-Picolin, 2,3-Lutidin, 2,4-Lutidin, 2,5-Lutidin, 2,6-Lutidin, 3,4-Lutidin, 3,5-Lutidin, 2,3,4-Collidin, 2,3,5-Collidin, 2,3,6-Collidin, 2,4,5-Collidin, 2,4,6-Collidin, 3,4,5-Collidin, N,N-dimethylaminopyridin, Imidazol, 1-Methylimidazol, 2-Methylimidazol, 4(5)-Methylimidazol, 1,2-Dimethylimidazol, 2,4(5)Dimethylimidazol, 1-Ethylimidazol, 2-Ethylimidazol, 1-Phenylimidazol, 2-Phenylimidazol, 4(5)Phenylimidazol, 1-Azanaphthalin (Chinolin), N,N-Dimethylanilin bevorzugt Pyridin und 2,6-Lutidin.

**6.** Verfahrens gemäß einem der Ansprüche 2 bis 5, wobei das Lösungsmittel (D) eine oder mehrere Verbindungen ist und ausgewählt wird aus der Gruppe bestehend aus 1,4-Dioxan, Ethylenglycoldimethylether, Diethylenglycoldimethylether, Tetrahydrofuran, bevorzugt 1,4-Dioxan und Tetrahydrofuran.

**7.** Präpolymer (A) erhältlich nach dem Verfahren gemäß einem der Ansprüche 2 bis 6.

**8.** Präpolymer (E) umfassend folgende Struktur

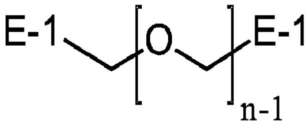

mit E-1 = Azid ($N_3$),O-CO-CH=$CH_2$, O-CO-C($CH_3$)=$CH_2$, O-CO-CH=CH($CH_3$), O-CO-$CH_2$-CH=$CH_2$, O-CO-$CH_2$-C($CH_3$)=$CH_2$, O-CO-$CH_2$-CH=CH($CH_3$), O-CO-O-$CH_2$-CH=$CH_2$, O-CO-O-$CH_2$-C($CH_3$)=$CH_2$, O-CO-O-$CH_2$-CH=CH($CH_3$), O-CO-C=CH, O-CO-$CH_2$-C≡CH, O-CO-C≡N, O-CO-$CH_2$-C≡N, O-CO-$(CH_2)_5$-OH, O-CO-Oxiran, O-CO-$CH_2$-Oxiran, O-$CH_2$-CH=$CH_2$, O-CH($CH_3$)-CH=$CH_2$, O-$CH_2$-C($CH_3$)=$CH_2$, O-$CH_2$-CH=CH($CH_3$), O-$(CH_2)_2$-CH=$CH_2$, O-$(CH_2)_4$-CH=$CH_2$, O-$(CH_2)_6$-CH=$CH_2$, O-$CH_2$-C≡CH, O-$CH_2$-C≡C($CH_3$), O-$(CH_2)_2$-C≡C($CH_3$), O-$(CH_2)_4$-C≡C($CH_3$), O-$(CH_2)_6$-C≡C($CH_3$), O-$CH_2$-C≡N, O-$(CH_2)_2$-C≡N, O-$(CH_2)_3$-C≡N, O-$(CH_2)_4$-C≡N, O-$(CH_2)_5$-C≡N, O-$(CH_2)_6$-C≡N, O-$(CH_2)_2$-OH, O-$(CH_2)_3$-OH, O-$(CH_2)_4$-OH, O-$(CH_2)_5$-OH, O-$(CH_2)_6$-OH, O-$(CH_2)_7$-OH, O-$(CH_2)_8$-OH, O-$CH_2$-CH($CH_3$)-OH, O-CH($CH_3$)-$CH_2$-OH, (O-$CH_2$-$CH_2)_2$-OH, (O-$CH_2$-$CH_2)_3$-OH, [O-$CH_2$-CH($CH_3$)$]_2$-OH, [O-$CH_2$-CH($CH_3$)$]_3$-OH und/oder O-$CH_2$-Oxiran, bevorzugt Azid ($N_3$), O-$CH_2$-CH=$CH_2$, O-CH($CH_3$)-CH=$CH_2$, O-$CH_2$-C($CH_3$)=$CH_2$, O-$CH_2$-CH=CH($CH_3$), O-$(CH_2)_2$-CH=$CH_2$, O-$(CH_2)_4$-CH=$CH_2$, O-$(CH_2)_6$-CH=$CH_2$, O-$CH_2$-C≡CH, O-$CH_2$-C≡C($CH_3$), O-$(CH_2)_2$-C≡C($CH_3$), O-$(CH_2)_4$-C≡C($CH_3$), O-$(CH_2)_6$-C≡C($CH_3$), O-$CH_2$-C≡N, O-$(CH_2)_2$-C≡N, O-$(CH_2)_3$-C≡N, O-$(CH_2)_4$-C≡N, O-$(CH_2)_5$-C≡N, O-$(CH_2)_6$-C≡N, O-$(CH_2)_2$-OH, O-$(CH_2)_3$-OH, O-$(CH_2)_4$-OH, O-$(CH_2)_5$-OH, O-$(CH_2)_6$-OH, O-$(CH_2)_7$-OH, O-$(CH_2)_8$-OH, O-$CH_2$-CH($CH_3$)-OH, O-CH($CH_3$)-$CH_2$-OH, (O-$CH_2$-$CH_2)_2$-OH, (O-$CH_2$-$CH_2)_3$-OH, [O-$CH_2$-CH($CH_3$)$]_2$-OH, [O-$CH_2$-CH($CH_3$)$]_3$-OH und/oder O-$CH_2$-Oxiran, besonders bevorzugt Azid ($N_3$), O-$CH_2$-CH=$CH_2$, O-$CH_2$-C≡CH, O-$(CH_2)_2$-OH, O-$(CH_2)_4$-OH, O-$CH_2$-CH($CH_3$)-OH, O-CH($CH_3$)-$CH_2$-OH, (O-$CH_2$-$CH_2)_2$-OH und/oder O-$CH_2$-Oxiran;

und mit einer mit einer zahlenmittleren Anzahl an Polyoxymethylenwiederholungseinheiten n von 3 bis 25 bevorzugt 4 bis 18 und besonders bevorzugt von 5 bis 12 beträgt, wobei die Anzahl an Polyoxymethylenwiederholungseinheiten mittels der im Experimentalteil offenbarten Protonenresonanzspektroskopie bestimmt worden ist.

**9.** Präpolymer (E) gemäß Anspruch 8 mit einer Onset-Temperatur von 105 °C bis 300 °C bevorzugt von 125 °C bis 300 °C, besonders bevorzugt von 145 °C bis 300 °C, wobei die Onset-Temperatur mittels der im Experimentalteil offenbarten Methode bestimmt wurde.

**10.** Verfahren zur Herstellung eines Präpolymers (E) umfassend der Umsetzung des Präpolymers (A) gemäß einem der Ansprüche 1 bis 8 mit einer Verbindung (F) optional in Gegenwart eines Katalysators (G) und optional in einem Lösungsmittel (H),

wobei die Verbindung (F) eine gegenüber der Gruppe (A-1) des Präpolymers (A, bevorzugt der Cl-Gruppe des Präpolymers (A) reaktive, nucleophile Gruppe (F-1) aufweist,

wobei die reaktive, nucleophile Gruppe (F-1) Azid ($N_3$), O-CO-CH=$CH_2$, O-CO-C($CH_3$)=$CH_2$, O-CO-CH=CH($CH_3$), O-CO-$CH_2$-CH=$CH_2$, O-CO-$CH_2$-C($CH_3$)=$CH_2$, O-CO-$CH_2$-CH=CH($CH_3$), O-CO-O-$CH_2$-CH=$CH_2$, O-CO-O-$CH_2$-C($CH_3$)=$CH_2$, O-CO-O-$CH_2$-CH=CH($CH_3$), O-CO-C=CH, O-CO-$CH_2$-C≡CH, O-CO-C=N, O-CO-$CH_2$-C≡N, O-CO-$(CH_2)_5$-OH, O-CO-Oxiran, O-CO-$CH_2$-Oxiran, O-$CH_2$-CH=$CH_2$, O-CH($CH_3$)-CH=$CH_2$, O-$CH_2$-C($CH_3$)=$CH_2$, O-$CH_2$-CH=CH($CH_3$), O-$(CH_2)_2$-CH=$CH_2$, O-$(CH_2)_4$-CH=$CH_2$, O-$(CH_2)_6$-CH=$CH_2$, O-$CH_2$-C≡CH, O-$CH_2$-C≡C($CH_3$), O-$(CH_2)_2$-C≡C($CH_3$), O-$(CH_2)_4$-C≡C($CH_3$), O-$(CH_2)_6$-C≡C($CH_3$), O-$CH_2$-C≡N, O-$(CH_2)_2$-C≡N, O-$(CH_2)_3$-C≡N, O-$(CH_2)_4$-C≡N, O-$(CH_2)_5$-C≡N, O-$(CH_2)_6$-C≡N, O-$(CH_2)_2$-OH, O-$(CH_2)_3$-OH, O-$(CH_2)_4$-OH, O-$(CH_2)_5$-OH, O-$(CH_2)_6$-OH, O-$(CH_2)_7$-OH, O-$(CH_2)_8$-OH, O-$CH_2$-CH($CH_3$)-OH, O-CH($CH_3$)-$CH_2$-OH, (O-$CH_2$-$CH_2)_2$-OH, (O-$CH_2$-$CH_2)_3$-OH, [O-$CH_2$-CH($CH_3$)$]_2$-OH, [O-$CH_2$-CH($CH_3$)$]_3$-OH und O-$CH_2$-Oxiran, bevorzugt Azid ($N_3$), O-$CH_2$-CH=$CH_2$, O-CH($CH_3$)-CH=$CH_2$, O-$CH_2$-C($CH_3$)=$CH_2$, O-$CH_2$-CH=CH($CH_3$), O-$(CH_2)_2$-CH=$CH_2$, O-$(CH_2)_4$-CH≡$CH_2$, O-$(CH_2)_6$-CH=$CH_2$, O-$CH_2$-C≡CH, O-$CH_2$-C≡C($CH_3$), O-$(CH_2)_2$-C≡C($CH_3$), O-$(CH_2)_4$-C≡C($CH_3$), O-$(CH_2)_6$-C≡C($CH_3$), O-$CH_2$-C≡N, O-$(CH_2)_2$-C≡N, O-$(CH_2)_3$-C≡N, O-$(CH_2)_4$-C≡N, O-$(CH_2)_5$-C≡N, O-$(CH_2)_6$-C≡N, O-$(CH_2)_2$-OH, O-$(CH_2)_3$-OH, O-$(CH_2)_4$-OH, O-$(CH_2)_5$-OH, O-$(CH_2)_6$-OH, O-$(CH_2)_7$-OH, O-$(CH_2)_8$-OH, O-$CH_2$-CH($CH_3$)-OH, O-CH($CH_3$)-$CH_2$-OH, (O-$CH_2$-$CH_2)_2$-OH, (O-$CH_2$-$CH_2)_3$-OH, [O-$CH_2$-CH($CH_3$)$]_2$-OH, [O-$CH_2$-CH($CH_3$)$]_3$-OH und O-$CH_2$-Oxiran und besonders bevorzugt Azid ($N_3$), O-$CH_2$-CH=$CH_2$, O-$CH_2$-C≡CH, O-$(CH_2)_2$-OH, O-$(CH_2)_4$-OH, O-$CH_2$-CH($CH_3$)-OH, O-CH($CH_3$)-$CH_2$-OH, (O-$CH_2$-$CH_2)_2$-OH und O-$CH_2$-Oxiran ist.

**11.** Verfahren gemäß Anspruch 10, wobei die die Verbindung (F) eine oder mehrere Verbindungen ist und ausgewählt wird aus der Gruppe bestehend aus $LiN_3$, $NaN_3$, $KN_3$, LiO-CO-CH=$CH_2$, LiO-CO-C($CH_3$)=$CH_2$, LiO-CO-CH=CH($CH_3$), LiO-CO-$CH_2$-CH=$CH_2$, LiO-CO-$CH_2$-C($CH_3$)=$CH_2$, LiO-CO-$CH_2$-CH=CH($CH_3$), LiO-CO-O-$CH_2$-CH=$CH_2$, LiO-CO-O-$CH_2$-C($CH_3$)=$CH_2$, LiO-CO-O-$CH_2$-CH=CH($CH_3$), LiO-CO-C≡CH, LiO-CO-$CH_2$-C=CH, HO-CO-C=N, LiO-CO-$CH_2$-C≡N, LiO-CO-$(CH_2)_5$-OH, LiO-CO-Oxiran, LiO-CO-$CH_2$-Oxiran, NaO-CO-CH=$CH_2$, NaO-CO-C($CH_3$)=$CH_2$, NaO-CO-CH=CH($CH_3$), NaO-CO-$CH_2$-CH=$CH_2$, NaO-CO-$CH_2$-C($CH_3$)=$CH_2$, NaO-CO-$CH_2$-CH=CH($CH_3$), NaO-CO-O-$CH_2$-CH=$CH_2$, NaO-CO-O-$CH_2$-C($CH_3$)=$CH_2$, NaO-CO-O-$CH_2$-CH=CH($CH_3$),

NaO-CO-C=CH, NaO-CO-CH$_2$-C≡CH, NaO-CO-C≡N, HO-CO-CH$_2$-C≡N, NaO-CO-(CH$_2$)$_5$-OH, NaO-CO-Oxiran, NaO-CO-CH$_2$-Oxiran, KO-CO-CH=CH$_2$, KO-CO-C(CH$_3$)=CH$_2$, KO-CO-CH=CH(CH$_3$), KO-CO-CH$_2$-CH=CH$_2$, KO-CO-CH$_2$-C(CH$_3$)=CH$_2$, KO-CO-CH$_2$-CH=CH(CH$_3$), KO-CO-O-CH$_2$-CH=CH$_2$, KO-CO-O-CH$_2$-C(CH$_3$)=CH$_2$, KO-CO-O-CH$_2$-CH=CH(CH$_3$), KO-CO-C=CH, KO-CO-CH$_2$-C≡CH, KO-CO-C=N, KO-CO-CH$_2$-C≡N, KO-CO-(CH$_2$)$_5$-OH, KO-CO-Oxiran, KO-CO-CH$_2$-Oxiran, LiO-CH$_2$-CH=CH$_2$, LiO-CH(CH$_3$)-CH=CH$_2$, LiO-CH$_2$-C(CH$_3$)=CH$_2$, LiO-CH$_2$-CH=CH(CH$_3$), LiO-(CH$_2$)$_2$-CH=CH$_2$, LiO-(CH$_2$)$_4$-CH=CH$_2$, LiO-(CH$_2$)$_6$-CH=CH$_2$, LiO-CH$_2$-C≡CH, LiO-CH$_2$-C≡C(CH$_3$), LiO-(CH$_2$)$_2$-C≡C(CH$_3$), LiO-(CH$_2$)$_4$-C≡C(CH$_3$), LiO-(CH$_2$)$_6$-C≡C(CH$_3$), LiO-CH$_2$-C≡N, LiO-(CH$_2$)$_2$-C≡N, LiO-(CH$_2$)$_3$-C≡N, LiO-(CH$_2$)$_4$-C≡N, LiO-(CH$_2$)$_5$-C≡N, LiO-(CH$_2$)$_6$-C≡N, LiO-(CH$_2$)$_2$-OH, LiO-(CH$_2$)$_3$-OH, LiO-(CH$_2$)$_4$-OH, LiO-(CH$_2$)$_5$-OH, LiO-(CH$_2$)$_6$-OH, LiO-(CH$_2$)$_7$-OH, LiO-(CH$_2$)$_8$-OH, LiO-CH$_2$-CH(CH$_3$)-OH, LiO-CH(CH$_3$)-CH$_2$-OH, Li-(O-CH$_2$-CH$_2$)$_2$-OH, Li-(O-CH$_2$-CH$_2$)$_3$-OH, Li-[O-CH$_2$-CH(CH$_3$)]$_2$-OH, Li-[O-CH$_2$-CH(CH$_3$)]$_3$-OH und, LiO-CH$_2$-Oxiran, NaO-CH$_2$-CH=CH$_2$, NaO-CH(CH$_3$)-CH=CH$_2$, NaO-CH$_2$-C(CH$_3$)=CH$_2$, NaO-CH$_2$-CH=CH(CH$_3$), NaO-(CH$_2$)$_2$-CH=CH$_2$, NaO-(CH$_2$)$_4$-CH=CH$_2$, NaO-(CH$_2$)$_6$-CH=CH$_2$, NaO-CH$_2$-C≡CH, NaO-CH$_2$-C≡C(CH$_3$), NaO-(CH$_2$)$_2$-C≡C(CH$_3$), NaO-(CH$_2$)$_4$-C≡C(CH$_3$), NaO-(CH$_2$)$_6$-C≡C(CH$_3$), NaO-CH$_2$-C≡N, NaO-(CH$_2$)$_2$-C≡N, NaO-(CH$_2$)$_3$-C≡N, NaO-(CH$_2$)$_4$-C≡N, NaO-(CH$_2$)$_5$-C≡N, NaO-(CH$_2$)$_6$-C≡N, NaO-(CH$_2$)$_2$-OH, NaO-(CH$_2$)$_3$-OH, NaO-(CH$_2$)$_4$-OH, NaO-(CH$_2$)$_5$-OH, NaO-(CH$_2$)$_6$-OH, NaO-(CH$_2$)$_7$-OH, NaO-(CH$_2$)$_8$-OH, NaO-CH$_2$-CH(CH$_3$)-OH, NaO-CH(CH$_3$)-CH$_2$-OH, Na-(O-CH$_2$-CH$_2$)$_2$-OH, Na-(O-CH$_2$-CH$_2$)$_3$-OH, Na-[O-CH$_2$-CH(CH$_3$)]$_2$-OH, Na-[O-CH$_2$-CH(CH$_3$)]$_3$-OH und, NaO-CH$_2$-Oxiran, KO-CH$_2$-CH=CH$_2$, KO-CH(CH$_3$)-CH=CH$_2$, KO-CH$_2$-C(CH$_3$)=CH$_2$, KO-CH$_2$-CH=CH(CH$_3$), KO-(CH$_2$)$_2$-CH=CH$_2$, KO-(CH$_2$)$_4$-CH=CH$_2$, KO-(CH$_2$)$_6$-CH=CH$_2$, KO-CH$_2$-C≡CH, KO-CH$_2$-C≡C(CH$_3$), KO-(CH$_2$)$_2$-C≡C(CH$_3$), KO-(CH$_2$)$_4$-C≡C(CH$_3$), KO-(CH$_2$)$_6$-C≡C(CH$_3$), KO-CH$_2$-C≡N, KO-(CH$_2$)$_2$-C≡N, KO-(CH$_2$)$_3$-C≡N, KO-(CH$_2$)$_4$-C≡N, KO-(CH$_2$)$_5$-C≡N, KO-(CH$_2$)$_6$-C≡N, KO-(CH$_2$)$_2$-OH, KO-(CH$_2$)$_3$-OH, KO-(CH$_2$)$_4$-OH, KO-(CH$_2$)$_5$-OH, KO-(CH$_2$)$_6$-OH, KO-(CH$_2$)$_7$-OH, KO-(CH$_2$)$_8$-OH, KO-CH$_2$-CH(CH$_3$)-OH, KO-CH(CH$_3$)-CH$_2$-OH, K-(O-CH$_2$-CH$_2$)$_2$-OH, K-(O-CH$_2$-CH$_2$)$_3$-OH, K-[O-CH$_2$-CH(CH$_3$)]$_2$-OH, K-[O-CH$_2$-CH(CH$_3$)]$_3$-OH und, KO-CH$_2$-Oxiran, bevorzugt LiN$_3$, NaN$_3$, KN$_3$, LiO-CH$_2$-CH=CH$_2$, LiO-CH(CH$_3$)-CH=CH$_2$, LiO-CH$_2$-C(CH$_3$)=CH$_2$, LiO-CH$_2$-CH=CH(CH$_3$), LiO-(CH$_2$)$_2$-CH=CH$_2$, LiO-(CH$_2$)$_4$-CH=CH$_2$, LiO-(CH$_2$)$_6$-CH=CH$_2$, LiO-CH$_2$-C=CH, LiO-CH$_2$-C≡C(CH$_3$), LiO-(CH$_2$)$_2$-C≡C(CH$_3$), LiO-(CH$_2$)$_4$-C≡C(CH$_3$), LiO-(CH$_2$)$_6$-C≡C(CH$_3$), LiO-CH$_2$-C≡N, LiO-(CH$_2$)$_2$-C≡N, LiO-(CH$_2$)$_3$-C≡N, LiO-(CH$_2$)$_4$-C≡N, LiO-(CH$_2$)$_5$-C≡N, LiO-(CH$_2$)$_6$-C≡N, LiO-(CH$_2$)$_2$-OH, LiO-(CH$_2$)$_3$-OH, LiO-(CH$_2$)$_4$-OH, LiO-(CH$_2$)$_5$-OH, LiO-(CH$_2$)$_6$-OH, LiO-(CH$_2$)$_7$-OH, LiO-(CH$_2$)$_8$-OH, LiO-CH$_2$-CH(CH$_3$)-OH, LiO-CH(CH$_3$)-CH$_2$-OH, Li-(O-CH$_2$-CH$_2$)$_2$-OH, Li-(O-CH$_2$-CH$_2$)$_3$-OH, Li-[O-CH$_2$-CH(CH$_3$)]$_2$-OH, Li-[O-CH$_2$-CH(CH$_3$)]$_3$-OH und, LiO-CH$_2$-Oxiran, NaO-CH$_2$-CH=CH$_2$, NaO-CH(CH$_3$)-CH=CH$_2$, NaO-CH$_2$-C(CH$_3$)=CH$_2$, NaO-CH$_2$-CH=CH(CH$_3$), NaO-(CH$_2$)$_2$-CH=CH$_2$, NaO-(CH$_2$)$_4$-CH=CH$_2$, NaO-(CH$_2$)$_6$-CH=CH$_2$, NaO-CH$_2$-C≡CH, NaO-CH$_2$-C≡C(CH$_3$), NaO-(CH$_2$)$_2$-C≡C(CH$_3$), NaO-(CH$_2$)$_4$-C≡C(CH$_3$), NaO-(CH$_2$)$_6$-C≡C(CH$_3$), NaO-CH$_2$-C≡N, NaO-(CH$_2$)$_2$-C≡N, NaO-(CH$_2$)$_3$-C≡N, NaO-(CH$_2$)$_4$-C≡N, NaO-(CH$_2$)$_5$-C≡N, NaO-(CH$_2$)$_6$-C≡N, NaO-(CH$_2$)$_2$-OH, NaO-(CH$_2$)$_3$-OH, NaO-(CH$_2$)$_4$-OH, NaO-(CH$_2$)$_5$-OH, NaO-(CH$_2$)$_6$-OH, NaO-(CH$_2$)$_7$-OH, NaO-(CH$_2$)$_8$-OH, NaO-CH$_2$-CH(CH$_3$)-OH, NaO-CH(CH$_3$)-CH$_2$-OH, Na-(O-CH$_2$-CH$_2$)$_2$-OH, Na-(O-CH$_2$-CH$_2$)$_3$-OH, Na-[O-CH$_2$-CH(CH$_3$)]$_2$-OH, Na-[O-CH$_2$-CH(CH$_3$)]$_3$-OH und, NaO-CH$_2$-Oxiran, KO-CH$_2$-CH=CH$_2$, KO-CH(CH$_3$)-CH=CH$_2$, KO-CH$_2$-C(CH$_3$)=CH$_2$, KO-CH$_2$-CH=CH(CH$_3$), KO-(CH$_2$)$_2$-CH=CH$_2$, KO-(CH$_2$)$_4$-CH=CH$_2$, KO-(CH$_2$)$_6$-CH=CH$_2$, KO-CH$_2$-C≡CH, KO-CH$_2$-C≡C(CH$_3$), KO-(CH$_2$)$_2$-C≡C(CH$_3$), KO-(CH$_2$)$_4$-C≡C(CH$_3$), KO-(CH$_2$)$_6$-C≡C(CH$_3$), KO-CH$_2$-C≡N, KO-(CH$_2$)$_2$-C≡N, KO-(CH$_2$)$_3$-C≡N, KO-(CH$_2$)$_4$-C≡N, KO-(CH$_2$)$_5$-C≡N, KO-(CH$_2$)$_6$-C≡N, KO-(CH$_2$)$_2$-OH, KO-(CH$_2$)$_3$-OH, KO-(CH$_2$)$_4$-OH, KO-(CH$_2$)$_5$-OH, KO-(CH$_2$)$_6$-OH, KO-(CH$_2$)$_7$-OH, KO-(CH$_2$)$_8$-OH, KO-CH$_2$-CH(CH$_3$)-OH, KO-CH(CH$_3$)-CH$_2$-OH, K-(O-CH$_2$-CH$_2$)$_2$-OH, K-(O-CH$_2$-CH$_2$)$_3$-OH, K-[O-CH$_2$-CH(CH$_3$)]$_2$-OH, K-[O-CH$_2$-CH(CH$_3$)]$_3$-OH und, KO-CH$_2$-Oxiran, besonders bevorzugt, LiN$_3$, LiO-CH$_2$-CH=CH$_2$, LiO-CH$_2$-C≡CH, LiO-(CH$_2$)$_2$-OH, LiO-(CH$_2$)$_4$-OH, LiO-CH$_2$-CH(CH$_3$)-OH, LiO-CH(CH$_3$)-CH$_2$-OH, Li-(O-CH$_2$-CH$_2$)$_2$-OH und LiO-CH$_2$-Oxiran, NaN$_3$, NaO-CH$_2$-CH=CH$_2$, NaO-CH$_2$-C≡CH, NaO-(CH$_2$)$_2$-OH, NaO-(CH$_2$)$_4$-OH, NaO-CH$_2$-CH(CH$_3$)-OH, NaO-CH(CH$_3$)-CH$_2$-OH, Na-(O-CH$_2$-CH$_2$)$_2$-OH und NaO-CH$_2$-Oxiran, KN$_3$, KO-CH$_2$-CH=CH$_2$, KO-CH$_2$-C≡CH, KO-(CH$_2$)$_2$-OH, KO-(CH$_2$)$_4$-OH, KO-CH$_2$-CH(CH$_3$)-OH, KO-CH(CH$_3$)-CH$_2$-OH, K-(O-CH$_2$-CH$_2$)$_2$-OH und KO-CH$_2$-Oxiran.

**12.** Verfahren gemäß Anspruch 10 oder 11, wobei das Stoffmengenverhältnis der reaktiven Gruppe (A-1) des Präpolymers (A) zur reaktiven, nucleophilen Gruppe (F-1) der Verbindung (F) von 0,9:1 bis 1:20 bevorzugt von 0,95:1 bis 1:50 und besonders bevorzugt von 0,95:1 bis 1:20 beträgt.

**13.** Verfahrens gemäß einem der Ansprüche 10 bis 12, wobei das Lösungsmittel (H) eine oder mehrere Verbindungen ist und ausgewählt wird aus der Gruppe bestehend aus 1,4-Dioxan, Ethylenglycoldimethylether, Diethylenglycoldimethylether, Ethylenglycol, Diethylenglycol, Propylenglycol, Dipropylenglycol, Butandiol, Tetrahydrofuran, Dimethoxymethan, Dichlormethan, 1,2-Dichloroethan, Chloroform, Tetrachlorkohlenstoff bevorzugt Tetrahydrofuran, Dichlormethan und 1,4-Dioxan.

**14.** Präpolymer (E) erhältlich nach dem Verfahren gemäß einem der Ansprüche 10 bis 13.

**15.** Verfahren zur Herstellung des Präpolymers (I) umfassend der Umsetzung des Präpolymers (E) gemäß einem der Ansprüche 9 bis 14 mit einer Verbindung (J) optional in Gegenwart eines Katalysators (K) und optional in einem Lösungsmittel (L),
wobei die Verbindung (J) ein oder mehrere Verbindungen ist und ausgewählt wird aus der Gruppe bestehend aus $O_2$, $H_2O_2$, 2-Chlorperbenzoesäure, tert-Butylhydroxyperoxid, Natriumpercarbonat, Peroxybenzoesäure, Peroxyessigsäure, Dioxiran, 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diiso¬cyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Di-isocyanatodicyclohexylmethan (H12MDI), 4-Isocyanatomethyl-1,8-octandiisocyanat (Triisocyanatononan, TIN), ω,ω'-Diisocyanato-1,3-dimethylcyclohexan (H6XDI), 1-Isocyanato-1-methyl-3-isocyanato-methyl¬cyclo¬¬hexan, 1-Isocyanato-1-methyl-4-isocyanato-methyl¬cyclo¬¬hexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4-Diisocyanatotoluol (TDI), 2,6-Diisocyanatotoluol (TDI)2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,5-Diisocyanatonaphthalin, 1,3-Bis(isocyanato-methyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate, bevorzugt 1,5-Diisocyanatopentan (PDI), ,6-Diisocyanatohexan (HDI), 1-Isocyanato-3,3,5-trimethyl-5-isocyanatomethylcyclohexan (Isophorondiisocyanat, IPDI), 4'-Di-isocyanatodicyclohexylmethan (H12MDI), 2,4-Diisocyanatotoluol (TDI), 2,6-Diisocyanatotoluol (TDI), 2,4- und 2,6-Diisocyanatotoluol (TDI) insbesondere das 2,4 und das 2,6-Isomere und technische Gemische der beiden Isomeren, 2,4'-Diiso¬cyana¬to¬diphenylmethan (MDI), 4,4'-Diiso¬cyana¬to¬diphenylmethan (MDI), 2,4'- und 4,4'-Diiso¬cyana¬to¬diphenylmethan (MDI), 1,3-Bis(isocyanato-methyl)benzol (XDI) deren Trimerisierungs- oder höheren Oligomerisierungsprodukte und/oder deren Addukte.

Europäisches Patentamt
European Patent Office
Office européen des brevets

# EUROPÄISCHER RECHERCHENBERICHT

Nummer der Anmeldung
EP 21 21 6602

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Henry Louis: "Sur les composés méthyléniques", , 1. Januar 1907 (1907-01-01), Seiten 65-83, XP055927560, Gefunden im Internet: URL:https://onlinelibrary.wiley.com/doi/epdf/10.1002/recl.19070260203 [gefunden am 2022-06-02] * Seite 78 * | 1-7 | INV. C08G2/08 C08G2/30 C08G2/34 C08G18/56 |
| X<br>A | EP 3 533 815 A1 (COVESTRO DEUTSCHLAND AG [DE]) 4. September 2019 (2019-09-04) * Anspruch 4 * * Absatz [0011] * * Absatz [0099] * * Ansprüche 1-7 * | 8,9,14<br>10-13,15 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 3. Juni 2022 | Laudi, Ines |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 21 21 6602

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-06-2022

| Im Recherchenbericht angeführtes Patentdokument | Datum der Veröffentlichung | Mitglied(er) der Patentfamilie | Datum der Veröffentlichung |
|---|---|---|---|
| EP 3533815 A1 | 04-09-2019 | CN 111868129 A | 30-10-2020 |
| | | EP 3533815 A1 | 04-09-2019 |
| | | EP 3759150 A1 | 06-01-2021 |
| | | US 2020392281 A1 | 17-12-2020 |
| | | WO 2019166365 A1 | 06-09-2019 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1144725 B
- GB 996826 A
- US 3575930 A
- WO 2004096746 A1
- WO 2014095679 A1
- EP 3498743 A1
- WO 2020099601 A1
- EP 2021085078 W
- EP 3080177 B1
- WO 1981001712 A1
- US 3436375 A
- JP 03263454 B
- JP 2928823 B
- US 3575930 A1


### In der Beschreibung aufgeführte Nicht-Patentliteratur


- **M. HAUBS.** Polyoxymethylenes. *Ullmann's Encyclopedia of Industrial Chemistry,* 2012
- *Bull. Chem. Soc. J.,* 1994, vol. 67, 2560-2566
- **G. REUS.** Formaldehyde. *Ullmann's Encyclopedia of Industrial Chemistry,* 2012